# EUROPEAN PATENT APPLICATION

(11) **EP 4 836 387 A2**
(43) Date of publication of application: **04.11.2026**
(21) Application number: 26186631.3
(22) Date of filing: 27.12.2021
(51) Int. Cl.: H04L 67/141

(54) **METHOD FOR TRANSMITTING DATA IN NEAR FIELD, DEVICE, AND SYSTEM**

(30) Priority: 31.12.2020 CN 202011641484
(62) Document number(s) of the earlier application(s) in accordance with Art. 76 EPC: 21914244.5 / 4 258 710
(71) Applicant: Huawei Technologies Co., Ltd., Shenzhen, Guangdong 518129 (CN)
(72) Inventor: ZHU, Jianjian, Shenzhen, 518129 (CN); CHEN, Yingtao, Shenzhen, 518129 (CN); SONG, Qiubin, Shenzhen, 518129 (CN)
(74) Representative: Körber, Martin Hans

(57) **Abstract**

This application provides a method for sending data in a near field, a device, and a system. In response to a request of a first service on a first device, the first device establishes a first connection to a second device, to send data of the first service to the second device, and in a process of establishing the first connection, sends a part of the data of the first service by using a second connection established between the first device and the second device. In this way, on a basis of not changing the process of establishing the first connection, in this process, the data of the service is transmitted by using another connection, so that data transmission can be started more quickly, to shorten a response time of the second device for the first service.

## Description

### TECHNICAL FIELD

This application relates to the field of communication technologies, and in particular, to a method for transmitting data in a near-field wireless network communication environment, a device, and a system.

### BACKGROUND

Currently, a quantity of terminal devices held by a user increases, and scenarios of service cooperation and communication between devices also become increasingly diversified. In a near field, terminals may be linked with each other. For example, a video of a video application (Application, App) running on a mobile phone is delivered to a television. Specifically, the video may be directly delivered to the television, or may be delivered to the television with no operating system by using a module or a device wiredly connected to the television. For another example, a screen of a terminal (for example, a mobile phone) is projected onto another terminal (for example, a tablet computer or a smart television), so that the projected terminal can display the screen of the projecting terminal. For another example, a file stored in one terminal is transmitted to another terminal. In a near-field wireless network communication environment, a location relationship between terminal devices may change with movement of a user, and stable communication quality is an important condition for ensuring user experience.

Near field is short for near-field wireless network communication environment, and refers to a communication environment in which a distance between devices ranges from more than 10 centimeters to less than 20 meters. In daily life, a common near-field wireless network communication environment is a scenario in which a plurality of terminal devices are deployed in a same room or adjacent rooms. For example, a user uses a mobile phone on a sofa in a living room to operate a smart television in the living room. Alternatively, a user uses a tablet computer on a seat in a conference room to operate a display screen that has an operating system and that is arranged in the conference room.

In a near field, two devices may implement communication by using a plurality of communication technologies and a plurality of communication architectures. Using different communication technologies and/or different communication architectures affects transmission performance. Currently, a common transmission manner represented by a peer-to-peer (Peer-to-Peer, P2P) architecture based on a wireless fidelity (wireless fidelity, Wi-Fi) technology in a near-field environment has flaws, and in some scenarios, cannot meet a performance requirement of a service on data transmission. Therefore, user experience is affected.

### SUMMARY

Embodiments of this application provide a method for transmitting data in a near field, an apparatus, and a system. Compared with a currently common transmission manner, the method can better meet a performance requirement of a service on data transmission in some scenarios, and improve transmission performance.

To achieve the foregoing objective, the following technical solutions are used in the embodiments of this application.

According to a first aspect, an embodiment of this application provides a method for transmitting data in a near field. In response to a request of a first service, a first device establishes a first connection between the first device and a second device, to send data of the first service to the second device, and in a process of establishing the first connection, the first device sends a part of the data of the first service by using a second connection established between the first device and the second device.

The first connection and the second connection may use different wireless networks.

The first service is a service of an application or a component running on the first device. The request of the first service may be triggered by a user by operating the first device, or may be triggered by the application or the component.

The first service is a service that needs to send data to another device. The data of the first service is data that needs to be processed (for example, sent) to complete the first service, or may be considered as data belonging to the first service. An instruction is also considered as a type of data. For example, the first service may be a projection service, and the data of the first service includes projected screen content. The first service may be a multimedia playback service, and the data of the first service includes a bitstream of multimedia or a network address of multimedia. The first service may be a service used to control the another device, and the data of the first service includes a control instruction. The first service may be a file transmission service, and the data of the first service includes a transmitted file. The file is a set of data that has a certain format and that can be identified or processed by an application program. The file may be a picture, a video, an audio, a compressed package, a document in various formats or types, an applet, a web page link, or the like.

The request of the first service is used to indicate to process the first service, and may be delivered by the application or the component of the first device to an operating system of the first device. The request of the first service may include or may not include a data transmission instruction. However, if the first service is to be completed, the request of the first service includes at least transmitting the data of the first service to another device. An identifier of the second device may be carried in the request of the first service. However, in more cases, the second device is discovered by scanning or broadcasting in a specific range near the first device by using a device discovery procedure in the process of establishing the first connection.

The first connection and the second connection use different networks, and using different networks includes at least one of the following aspects: communication technologies used by the networks are different, and networking structures of the networks are different. For example, a Wi-Fi technology, a 5G technology, a Bluetooth technology, and an infrared technology are different communication technologies. A direct network and a network accessed based on an access point have different networking structures. Different networks use different interfaces on a network adapter or different network adapters. Different networks may be indicated by different names.

The process of establishing the first connection includes a preparation process before the first connection is established, and includes a process of establishing a connection based on an accessed network. In the preparation process before the first connection is established, at least one of a network used to establish the first connection and a network used to access the first connection is included. How to specifically implement the process of establishing the first connection depends on a wireless communication technology and a communication architecture (usually, a P2P architecture or an architecture based on an access point) in a near field that are used by the first connection. Certainly, regardless of the technology to be used, the first device and the second device need to exchange messages in the process. Each wireless communication technology and each communication architecture in a near field have a protocol and a rule with which the wireless communication technology and the near-field communication architecture comply, and no modification is made to the protocol and the rule in this application. Therefore, provided that a communication technology and a communication architecture that are used by the first connection are specified, the process of establishing the first connection complies with stipulations in an existing document. The communication technology and the communication architecture that are used by the first connection correspond to a communication technology and an architecture that are preset by the first device and the second device or that are configured by default and that are used to communicate with another device in a near field. For example, the communication architecture used by the first connection is configured as a peer-to-peer (Peer-to-Peer, P2P) architecture based on a wireless fidelity (Wireless Fidelity, Wi-Fi) technology.

Establishment of the second connection is completed before establishment of the first connection is completed. Therefore, in the process of establishing the first connection, data may be transmitted by using the second connection. In one case, establishment of the second connection is completed before establishment of the first connection starts. In another case, establishment of the second connection is completed after establishment of the first connection starts and before establishment of the first connection is completed.

In the foregoing method, to respond to the request of the first service, the first device establishes the first connection to transmit the data of the first service. In other words, the data of the first service is intended to be transmitted by using the first connection. However, it takes time to establish the first connection. Therefore, in the process of establishing the first connection, a part of the data of the first service is first sent by using the second connection established between the first device and the second device. In this way, when the first connection is still being established, the data of the first service is first transmitted by using the established second connection, so that transmission of service data can be started more quickly without waiting for completion of establishment of the first connection, a waiting time before data transmission of a service can be shortened, and a speed of response to a service request can be increased, thereby improving transmission performance.

With reference to the foregoing descriptions of the first aspect, in some implementations, the first service may be one or more specific services. In other words, not all services may need to improve an existing method in the manner described in this application, and some services may still use the prior art. For example, the first service is a projection service. This is because the projection service has a relatively high requirement on a display delay. To be specific, after a projection request is initiated, projected content is expected to be displayed on a projected device more quickly. According to the foregoing method, transmission of service data can be started more quickly, thereby improving transmission performance.

With reference to the foregoing descriptions of the first aspect, in an implementation, after establishment of the first connection is completed, the first device sends the data of the first service to the second device by using the first connection. In this way, finally, the data of the first service is transmitted by using the first connection, so that a resource required for establishing and maintaining the first connection is not wasted, and the data of the first service can be better transmitted. This is because usually, a default communication technology and a default communication architecture that are used by the first connection have more stable transmission performance, and are more favorable to data transmission.

When establishment of the first connection is completed, the first device knows. For example, the first device may receive a message that is sent by the second device and that indicates that connection establishment is completed. How the first device determines that establishment of the first connection is completed is related to a communication technology used by the first connection. For details, refer to stipulations in an existing communication technology.

In addition, transmitting the data of the first service by using the first connection may be transmitting data that is not successfully transmitted by using the second connection, or may be retransmitting the data of the first service.

Optionally, after sending the data of the first service by using the first connection, the first device disconnects or terminates the second connection, to reduce transmission resources.

With reference to the foregoing descriptions of the first aspect, the method in the first aspect further includes: Based on the request of the first service, the first device starts establishment of the second connection.

To be specific, the second connection is established after the request of the first service is generated. This may also be understood as that the second connection is established in the process of establishing the first connection, but completion of establishment of the second connection is faster than that of the first connection.

In addition, "based on the request of the first service", starting establishment of the second connection means that the request of the first service may not be modified, and an existing service request format is still used, that is, a requirement of starting the second connection is not reflected. However, the first device modifies a data transmission process based on the request of the first service, and establishes an additional connection. To be specific, after obtaining the request delivered by the first service, program code of the first device not only needs to establish the first connection that is intended to be used to transmit the data of the first service, but also establishes the second connection whose establishment process takes a shorter time than that of the first connection. In this way, establishment of the second connection is completed before the first connection, and the second connection starts to transmit the data of the first service first. Therefore, in the process of establishing the first connection, the data of the first service may be transmitted by using another connection for at least a part of a time, so that the second device at a peer end can start to receive the data of the first service more quickly, and a response time for the first service is reduced. In addition, the second connection does not need to be prepared in advance, and the second connection is established only when there is a requirement on data service quality in a near field.

With reference to the foregoing descriptions of the first aspect, in an implementation, data of a second service is sent to the second device by using a third connection, where the third connection and the first connection use a same wireless network. In a process of sending the data of the second service, in response to a request of a third service, data of the third service is sent by using a fourth connection; or in response to a request of a third service, data of the third service is sent by using a fifth connection, and the data of the second service is sent by using a fourth connection, where the fourth connection and the second connection use a same wireless network, and the fifth connection and the first connection use a same wireless network.

Using different wireless networks means using different network technologies or corresponds to different network topologies. Because wireless networks carrying two links are different, transmission performance of the two connections is relatively easy to compare. Refer to existing standards for determining quality of the transmission performance. For example, the transmission performance is indicated by at least one of the following parameters: a bandwidth, a delay, and a packet loss rate. The bandwidth and the delay are most common. Usually, that transmission performance of the first connection is better than transmission performance of the second connection may be that a bandwidth (which may also be represented by a throughput) of a network corresponding to the first connection is higher than that of a network corresponding to the second connection, or stability of a network of the first connection is better than that of the second connection. Stability means that a parameter of a network indicating transmission performance fluctuates slightly.

In other words, in a process in which the first device sends the data of the service by using the first connection, another service needs to be executed, that is, when data of another service needs to be sent, the first device is still transmitting the data of the service, and does not complete transmission. In response to a request of the service (that is, the second service), the first device may send data of the new service by using another network, or send data of the new service by using a network that is being used, and further perform an additional action, that is, adjust a network used by the data of the service that is being sent. Data transmission of the two services overlaps in time, that is, a network resource is simultaneously used in at least a part of a process. As a result, the two services affect each other. In this case, this may be reflected on the second device. For example, a service freezes on the second device, or a service does not respond to an operation on the second device. In the prior art, data of the two services is either transmitted by using one network, or data of each service is transmitted on two networks, instead of respectively transmitting the data of the two services on two networks, to decouple data transmission of the two services as in the foregoing implementation. In the foregoing implementation, resources of two different networks may be used to respectively transmit the data of the two services, so that the resources can be fully utilized, and resource preemption is avoided when the data of the two services is simultaneously transmitted.

In addition, it should be noted that, in a solution of sending the data of the third service by using the fourth connection, the first device may first send the data of the second service, and then send the data of the third service by using the fourth connection. Alternatively, the first device may send the data of the third service by using the fourth connection, and then send the data of the second service. Even, the two services may be simultaneously processed, that is, sending the data of the third service and changing the connection through which the second service is sent are simultaneously triggered.

With reference to the foregoing descriptions of the first aspect, in an implementation, a total bandwidth requirement of the first service and the second service is greater than a bandwidth of the third connection, and the bandwidth of the third connection is greater than a bandwidth of the fourth connection. Bandwidths of the third connection and the fourth connection may be represented by bandwidths of the two connections, or may be represented by bandwidths of networks used by the two connections.

In the scenario described herein, that is, a bandwidth that needs to be occupied by two services whose a part of data needs to be simultaneously transmitted cannot be satisfied by using only a network resource of the third connection. In this case, if a resource of another network can be used, data transmission performance of the two services can be better ensured. In addition, because the bandwidth of the third connection is greater than that of the fourth connection, the data of the second service is first transmitted by using the third connection, that is, a network with good transmission performance is preferentially used.

With reference to the foregoing descriptions of the first aspect, in an implementation, if a bandwidth requirement of the second service is greater than a bandwidth requirement of the third service, the data of the third service is sent by using the fourth connection. For example, the second service is a projection service, and the third service is a service used to control the second device, or the second service is a file transmission service, and the third service is a projection service or a service used to control the second device. If the bandwidth requirement of the second service is less than the bandwidth requirement of the third service, the data of the third service is sent by using the fifth connection, and the data of the second service is sent by using the fourth connection. In other words, data of a service having a high bandwidth requirement is sent by using a default network used by the first connection, and data of a service having a low bandwidth requirement is sent by using a network used by the second connection. For example, the second service is a service used to control the second device, and the third service is a projection service, or the second service is a projection service or a service used to control the second device, and the third service is a file transmission service.

With reference to the foregoing descriptions of the third aspect, in an implementation, if a priority of the second service is higher than a priority of the third service, the data of the third service is sent by using the fourth connection. If the priority of the second service is lower than the priority of the third service, the data of the third service is sent by using the fifth connection, and the data of the second service is sent by using the fourth connection. In other words, data of a service with a high priority is sent by using a default network used by the first connection, and data of a service with a low priority is sent by using a network used by the second connection. For example, a service used to control the second device has a higher priority.

According to a second aspect, an embodiment of this application provides another method for transmitting data in a near field. The method includes: A second device assists a first device in establishing a first connection based on a first instruction received from the first device, to receive data of a first service from the first device. In a process of assisting in establishing the first connection, the second device receives a part of the data of the first service by using a second connection established between the first device and the second device. The first connection and the second connection may use different wireless networks.

It can be learned that the second aspect is a method corresponding to the first aspect or even a third aspect, and is described from a perspective of the second device, because both connection establishment and successful service data sending require cooperation of two devices. Therefore, various descriptions and implementations of the first aspect and the third aspect are also applicable to the second aspect, and are not described herein again. Based on the descriptions of the first aspect, the following implementations are briefly listed as a supplement.

With reference to the foregoing descriptions of the second aspect, in an implementation, the method in the second aspect further includes: After establishment of the first connection is completed, the second device receives the data of the first service from the first device by using the first connection.

With reference to the foregoing descriptions of the second aspect, the method in the second aspect further includes: assisting the first device in establishing the second connection based on a second instruction received from the first device. To be specific, the second device cannot perceive the request of the first service. However, the first device starts a process of establishing the second connection, and sends, to the second device, an instruction used to establish the second connection. The second device may start, based on the instruction, corresponding instruction interaction to establish the connection.

According to a third aspect, an embodiment of this application provides still another method for transmitting data in a near field. The method includes:

sending data of a first service to a second device by using a first network; and in a process of sending the data of the first service, in response to a request of a second service, sending data of the second service by using a second network; or in response to a request of a second service, sending data of a second service by using the first network, and sending the data of the first service by using the second network.

The first network and the second network are different networks, that is, use different network technologies and/or correspond to different network topologies. In some implementations, at least one of the first network and the second network is a wireless network. In this way, transmission performance of the two networks is relatively easy to compare. Refer to existing standards for determining quality of the transmission performance. For example, the transmission performance is indicated by at least one of the following parameters: a bandwidth, a delay, and a packet loss rate. The bandwidth and the delay are most common. Usually, that transmission performance of the first network is better than transmission performance of the second network may be that a bandwidth (which may also be represented by a throughput) of the first network is higher than that of the second network, or stability of the first network is better than that of the second network. Stability means that a parameter of a network indicating transmission performance fluctuates slightly.

In addition, a connection corresponding to the second network may be established in response to the request of the second service, or a connection corresponding to the second network has been established, but is not used when only the data of the first service is transmitted. The first device can always access the second network. In this way, a connection can be established more quickly.

With reference to the foregoing descriptions of the third aspect, in an implementation, a total bandwidth requirement of the first service and the second service is greater than a bandwidth of the first network, and the bandwidth of the first network is greater than a bandwidth of the second network.

With reference to the foregoing descriptions of the third aspect, in an implementation, if a bandwidth requirement of the first service is greater than a bandwidth requirement of the second service, the first device sends the data of the second service by using the second network. If the bandwidth requirement of the first service is less than the bandwidth requirement of the second service, the first device sends the data of the second service by using the first network, and sends the data of the first service by using the second network.

With reference to the foregoing descriptions of the third aspect, in an implementation, transmission performance of the first network is better than transmission performance of the second network, and if a priority of the first service is higher than a priority of the second service, the first device sends the data of the second service by using the second network. If the priority of the first service is lower than the priority of the third service, the first device sends the data of the second service by using the first network, and sends the data of the first service by using the second network.

With reference to the foregoing descriptions of the third aspect, in an implementation, the first device uses the first network and the second network based on a multipath MP technology.

It can be learned that the method in the third aspect corresponds to a data transmission phase, and the first aspect completely describes a connection establishment phase and a data transmission phase. Therefore, some implementation methods of the first aspect also correspond to this phase. Content of the third aspect is similar to some implementation methods of the first aspect, except that a perspective of expression is changed from connection switching to network switching. Therefore, descriptions of the implementations corresponding to the content of the third aspect in the first aspect are also applicable to the third aspect. In addition, the first aspect and the third aspect are described from a perspective of the first device, that is, a transmit end of service data. This method is a method for transmitting data, and further relates to a receive end of the service data, that is, the second device. A method corresponding to the second device is the method in the second aspect. The descriptions of the first aspect and the third aspect are also applicable to a corresponding part of the second aspect, and are not repeatedly described herein.

In addition, the "first service" in the third aspect may be a same as or different from the "first service" in the first aspect. A same name is used herein only for consistency with the claims. The "first service" and the "second service" in the third aspect are different services. Therefore, various explanations and descriptions of the first aspect are also applicable to the third aspect, and details are not described herein again.

According to a fourth aspect, an embodiment of this application provides a system for transmitting data in a near field. The system includes a first device and a second device. The first device is configured to establish a first connection between the first device and the second device in response to a request of a first service, to send data of the first service to the second device. The first device is further configured to: in a process of establishing the first connection, send a part of the data of the first service by using a second connection established between the first device and the second device. The second device is configured to: cooperate with the first device to establish the first connection and the second connection, and receive the data of the first service. The first connection and the second connection use different networks.

The fourth aspect is a system corresponding to the method in the first aspect (the third aspect may be used as a supplement to the first aspect) and the method in the second aspect. Therefore, for specific descriptions and technical effects of the system, refer to descriptions in the methods in the foregoing several aspects.

According to a fifth aspect, an embodiment of this application provides an apparatus for sending data in a near field. The apparatus includes: a connection establishment module, configured to establish a first connection between a first device and a second device in response to a request of a first service, to send data of the first service to the second device; and a sending module, configured to: in a process of establishing the first connection, send a part of the data of the first service by using a second connection established between the first device and the second device.

In some implementations, the first connection and the second connection use different wireless networks.

With reference to the foregoing descriptions of the first aspect, in an implementation, the sending module is further configured to: after establishment of the first connection is completed, the first device sends the data of the first service to the second device by using the first connection.

With reference to the foregoing description of the fifth aspect, in an implementation, the connection establishment module is further configured to start establishment of the second connection based on the request of the first service.

With reference to the foregoing descriptions of the fifth aspect, in an implementation, the sending module is further configured to: send data of a second service to the second device by using a third connection, where the third connection and the first connection use a same wireless network; and in a process of sending the data of the second service, in response to a request of a third service, send data of the third service by using a fourth connection; or in response to a request of a third service, send data of the third service by using a fifth connection, and send the data of the second service by using a fourth connection, where the fourth connection and the second connection use a same wireless network, and the fifth connection and the first connection use a same wireless network.

With reference to the foregoing descriptions of the fifth aspect, in an implementation, the sending module is further configured to: if a bandwidth requirement of the second service is greater than a bandwidth requirement of the third service, send the data of the third service by using the fourth connection; and if the bandwidth requirement of the second service is less than the bandwidth requirement of the third service, send the data of the third service by using the fifth connection, and send the data of the second service by using the fourth connection.

With reference to the foregoing descriptions of the fifth aspect, in an implementation, the sending module is further configured to: if a priority of the second service is higher than a priority of the third service, send the data of the third service by using the fourth connection; and if the priority of the second service is lower than the priority of the third service, send the data of the third service by using the fifth connection, and send the data of the second service by using the fourth connection.

The fifth aspect is the apparatus corresponding to the first aspect. For descriptions of the apparatus and technical effects, refer to the first aspect.

According to a sixth aspect, an embodiment of this application provides an apparatus for receiving data in a near field. The apparatus includes: a connection establishment module, configured to assist a first device in establishing a first connection based on a first instruction received from the first device, to receive data of a first service from the first device; and a receiving module, configured to: in a process of assisting in establishing the first connection, receive a part of the data of the first service by using a second connection established between the first device and a second device.

In some implementations, the first connection and the second connection use different wireless networks.

With reference to the foregoing description of the sixth aspect, in an implementation, the connection establishment module is further configured to assist the first device in establishing the second connection based on a second instruction received from the first device.

With reference to the foregoing descriptions of the sixth aspect, in an implementation, the receiving module is further configured to: after establishment of the first connection is completed, the second device receives the data of the first service from the first device by using the first connection.

The sixth aspect is the apparatus corresponding to the second aspect. For descriptions of the apparatus and technical effects, refer to the first aspect and the third aspect.

According to a seventh aspect, an embodiment of this application provides an apparatus for sending data in a near field. The apparatus includes a sending module, configured to: send data of a first service to a second device by using a first wireless network; and in a process of sending the data of the first service, in response to a request of a second service, send data of the second service by using a second wireless network; or in response to a request of a second service, send data of a second service by using the first wireless network, and send the data of the first service by using the second wireless network.

The seventh aspect corresponds to the method of the third aspect. For descriptions of the apparatus, various implementations, and technical effects, refer to the first aspect and the third aspect.

To save space, the following describes some common descriptions and implementations of the first aspect to the seventh aspect. These descriptions are applicable to all the foregoing aspects.

In an implementation, the first device communicates with the second device by using a multipath MP technology. In other words, the first connection and the second connection are sub-connections that belong to a same multipath connection. In this implementation, both the first device and the second device support the multipath technology. In this way, the first connection and the second connection may be managed in one multipath connection by using the multipath technology. This is more convenient. In a process of changing a connection through which data of a service is transmitted from the second connection to the first connection, or changing a connection through which data of a service is transmitted from the second connection to the first connection, switching is smoother, and data transmission of the service is not interrupted. A part of data transmitted on a previous connection does not need to be retransmitted by using another connection.

In an implementation, the first connection uses a direct wireless network, and the second connection uses a wireless network based on an access point. In other words, the first network mentioned in the foregoing part is a direct wireless network, and the second network is a wireless network based on an access point. A direct wireless network is a network in which two devices directly communicate, that is, a network using a P2P architecture, enables the two devices to exclusively occupy a resource of a P2P network, and has stable transmission performance. An access point (Access Point) may be understood as a device configured to access a network. The device that accesses the network by using the access point also needs to use the access point to transmit data by using the network. Therefore, the access point also has a function of a forwarding device. Although the name "an access point" is commonly used in a Wi-Fi wireless local area network, the name does not limit a type of a network technology. Any device that is configured to access a network and that has a forwarding function may be referred to as an access point.

In this implementation, data transmission can be started more quickly by using a network based on an access point, because the network is already established, and the network can be directly accessed to establish a connection. A preparation process of establishing a connection is shorter than that of establishing a connection by using a direct wireless network. In a process of creating a connection based on a direct network, two devices transmit data based on the access point, so that data transmission can be started more quickly and a response time can be shortened. The conventional technology may be used for a process of establishing the first connection based on the network based on the access point and a process of establishing the second connection based on the direct network.

In an implementation, both the first connection and the second connection use a Wi-Fi communication technology. In other words, in the process of establishing the first connection, a Wi-Fi network between the first device and the second device is established, and the access point is also a device based on a Wi-Fi technology, for example, a router. Certainly, communication technologies used by the first connection and the second connection are not limited, provided that a time taken to establish the first connection is longer than a time taken to establish the second connection.

In an implementation, the first service is a projection service. In this way, by using the method in this application, a screen of the first device can be projected to the second device as soon as possible, thereby shortening a response time and shortening a waiting time of the user.

In an implementation, a screen area of the first device is smaller than that of the second device. For example, the first device is a smartphone, and the second device is a tablet device or a smart television. For another example, the first device is a laptop computer or a tablet device, and the second device is a smart television.

According to an eighth aspect, this application provides a system for transmitting data in a near field. The system includes a first device and a second device. The first device is configured to establish a first connection between the first device and the second device in response to a request of a first service, to send data of the first service to the second device. The first device is further configured to: in a process of establishing the first connection, send a part of the data of the first service by using a second connection established between the first device and the second device. The first connection and the second connection use different wireless networks. The second device is configured to: cooperate with the first device to establish the first connection and the second connection, and receive the data of the first service.

For the descriptions of the first device and the second device in the eighth aspect, refer to the first aspect, the second aspect, and common descriptions. Details are not repeated herein again.

According to a ninth aspect, this application further provides a method for controlling a device, applied to a second device to which a screen of the first device is projected. The method includes: The second device displays screen content of the first device. The second device receives a file from the first device. In a process in which the second device receives the file, a screen of the second device maintains display of the screen content of the first device, and in response to an operation performed by a user on the second device, changes at least a part of the screen content of the first device displayed on the second device.

In some implementations, maintaining the display of the screen content of the first device may include zooming out the screen content, or changing a display form such as an orientation or a color of the screen content.

The operation performed by the user on the second device is actually an operation performed by the user on a control or an area in the screen content of the first device displayed on the second device. The operation may be click, double-click, long-press, knuckle tap, scroll, or the like.

The file is a set of data that has a certain format and that can be identified or processed by an application program. The file may be a picture, a video, an audio, a compressed package, a document in various formats or types, an applet, a web page link, or the like.

In a process in which the second device receives the file from the first device, projection does not stop, and the second device does not fail to respond to control performed by the user over the screen of the first device on the second device because the second device needs to receive the file. In this way, frame freezing of a service is reduced, and user experience is improved. In fact, frame freezing of the service is caused because data of a plurality of services all need to be transmitted. As a result, a network resource is preempted, and data of some services cannot be transmitted to the second device in a timely or smooth manner. The ninth aspect corresponds to a scenario in which data of two services is simultaneously sent to the second device in the foregoing aspects.

According to a tenth aspect, this application provides an apparatus. The apparatus has a function of implementing the method in any one of the foregoing aspects. This function may be implemented by using hardware, or may be implemented by executing corresponding software by hardware. The hardware or the software includes one or more modules corresponding to the foregoing functions.

According to an eleventh aspect, a device is provided. The device includes: a processor and a memory. The memory is configured to store computer executable instructions. When the communication apparatus runs, the processor executes the computer executable instructions stored in the memory, so that the communication apparatus performs the sending rate adjustment method in any one of the foregoing aspects.

According to a twelfth aspect, a communication apparatus is provided. The apparatus includes: a memory and a processor. The memory is coupled to the processor, the memory is configured to store computer program code, the computer program code includes computer instructions, and when the computer instructions are executed by the processor, the method in any one of the foregoing aspects is performed based on the instructions.

According to a thirteenth aspect, an embodiment of this application provides a chip system. The chip system includes a processing circuit, and may further include a storage medium. The storage medium stores instructions. When the instructions are executed by the processing circuit, the instructions are used to implement a function of the method described in any one of the foregoing aspects. The chip system may include a chip, or may include a chip and another discrete component.

According to a fourteenth aspect, a communication apparatus is provided. The apparatus may be a circuit system, the circuit system includes a processing circuit, and the processing circuit is configured to perform the method in any one of the foregoing aspects.

According to a fifteenth aspect, an embodiment of this application further provides a computer-readable storage medium, including instructions. When the instructions run on a computer, the computer is enabled to perform the method in any one of the foregoing aspects.

According to a sixteenth aspect, an embodiment of this application further provides a computer program product, including instructions. When the instructions run on a computer, the computer is enabled to perform the method in any one of the foregoing aspects.

For the tenth aspect to the sixteenth aspect, reference is made to the methods in the foregoing plurality of aspects. When reference is made to one of the aspects, correspondingly refer to the foregoing descriptions in the aspects and the descriptions of technical effects.

### BRIEF DESCRIPTION OF DRAWINGS

FIG. 1 is a schematic diagram of communication between a smartphone, a tablet device, and a router according to an embodiment of this application;
FIG. 2A is a schematic diagram in which a screen of a smartphone is projected to a smart television and waiting occurs according to an embodiment of this application;
FIG. 2B and FIG. 2C are schematic diagrams of multi-service interaction between a smartphone and a smart television according to an embodiment of this application;
FIG. 3 is a schematic diagram of a system architecture according to an embodiment of this application;
FIG. 4 is a schematic diagram of structures of a first device and a second device according to an embodiment of this application;
FIG. 5 is a schematic diagram of protocol stack encapsulation and data transmission according to an embodiment of this application;
FIG. 6A is a schematic flowchart of a data transmission method according to an embodiment of this application;
FIG. 6B is a schematic flowchart of another data transmission method according to an embodiment of this application;
FIG. 7 is a schematic diagram of a structure of three parts of a protocol stack supporting a multipath protocol according to an embodiment of this application;
FIG. 8 is a schematic diagram of data processing of a protocol stack supporting a multipath protocol according to an embodiment of this application;
FIG. 9 is a schematic diagram of an architecture of an apparatus according to an embodiment of this application;
FIG. 10 is a schematic flowchart of a data transmission method according to an embodiment of this application;
FIG. 11 is a schematic diagram of a structure of a terminal according to an embodiment of this application;
FIG. 12 is a schematic diagram of a structure of a data transmit end (corresponding to a first device) according to an embodiment of this application; and
FIG. 13 is a schematic diagram of a structure of a data receive end (corresponding to a second device) according to an embodiment of this application.

### DESCRIPTION OF EMBODIMENTS

First, some expressions that may appear in this application are described.

Unless otherwise specified, words such as "first" and "second" are used to distinguish between different objects or different processing on a same object, but are not used to describe a specific order of the objects. Where indicated, "first" and "second" may indicate a same object.

"At least one" means one or more. "A plurality of" means two or more.

The term "and/or" is an association relationship for describing associated objects and represents that three relationships may exist. For example, A and/or B may represent the following three cases: Only A exists, both A and B exist, and only B exists, where A and B may be singular or plural.

The character "/" generally indicates an "or" relationship between associated objects. For example, A/B may represent A or B.

In addition, the terms "comprise" and "have" and any variations thereof referred to in the descriptions of this application are intended to cover non-exclusive inclusions. For example, a process, a method, a system, a product, or a device that includes a series of steps or units is not limited to the listed steps or units, but optionally further includes other unlisted steps or units, or optionally further includes another inherent step or unit of the process, the method, the product, or the device.

It should be noted that in embodiments of this application, the word "example" or "for example" or the like is used to represent giving an example, an illustration, or a description. Any embodiment or design solution described as "example" or "for example" in the embodiments of this application should not be interpreted as being more preferred or advantageous than another embodiment or design solution. Exactly, use of the word "example", "for example", or the like is intended to present a relative concept in a specific manner.

In the specification and the accompanying drawings of this application, "corresponding (English: corresponding, relevant)" and "corresponding (English: corresponding)" may mixed sometimes. It should be noted that meanings to be expressed are the same when a difference is not emphasized.

In addition, some technical terms in this application are briefly described.

A network interface card (Network Interface Card, NIC) may also be referred to as a network interface controller (Network Interface Controller, NIC), or a network adapter (network adapter), referred to as a network adapter for short. The network adapter mentioned in this specification is a physical network adapter, or may be a virtual network adapter virtualized from a physical network adapter. A physical network adapter is a piece of hardware designed to allow a physical machine or another device to access a network and communicate with another network element. For example, a subscriber identity module (Subscriber Identity Module, SIM), that is, a SIM card, is also a network adapter.

A connection (connection) is used to transmit data between a transmit end (a sender for short) and a receive end (a receiver for short). The data is considered as a special kind of data. An instruction has a control function. A connection uses one or more paths (path) in a network topology to transmit data. A path is a link (link) formed by end devices on which the sender and the receiver are located, and a network device between the sender and the receiver. A path is also referred to as a transmission path in this specification.

A multipath (Multipath, MP) connection is a connection in which two hosts (host) can communicate through a plurality of paths over (over) an application. A multipath connection includes two or more sub-connections, and each sub-connection uses one path. A connection commonly described is short for a single-path connection that uses only one path to transmit data. In this application, a connection may be a single-path connection or a multipath connection.

A path (path) is a link between a sender (sender) and a receiver (receiver) of the path. A link may forward data by using one or more network nodes (which may be carried on a forwarding device such as a router and a gateway).

An end device is a device on which two ends of a path are located. Both a sender (sender) and a receiver (receiver) of data are end devices. An end device is different from a forwarding device. A function of the forwarding device is to transfer data from one end device on a path to another end device. The forwarding device is also referred to as an access point in this application. With development of communication technologies today, networking structures are diversified and complex, for example, end (terminal device)-to-end (terminal device) communication, end (terminal device) cloud (cloud device, such as server) communication, and cloud-cloud communication. This application resolves a problem in a near-field wireless network communication environment. Therefore, a device described in this application is mainly a terminal device, for example, a mobile phone, a smart television, and a tablet computer.

A sub-connection is a connection that runs on each single path (path) in a multipath connection. In a multipath transmission technology, a sub-connection may use a plurality of common single-stream transmission protocols, such as the transmission control protocol (Transmission Control Protocol, TCP), the user datagram protocol (User Datagram Protocol, UDP), the quick UDP internet connections (Quick UDP Internet Connections) protocol, the stream control transmission protocol (Stream Control Transmission Protocol, STCP), and even some private protocols. Different sub-connections of a same multipath connection can use different transport protocols.

An identifier is used to distinguish one kind of thing or a thing from a thing of the same kind or a different kind. The identifier is, for example, an identifier of a service, an identifier of a network, or an identifier of a network adapter. The identifier may be a name or a number, or a distinguishing feature, for example, a category identifier, may be used as the identifier. Implementation of various identifiers is not limited in this application, provided that differentiation can be made.

A service is a function that can be started or even completed by an application on a device, such as projection, file transmission, device control, and display content (such as application) control. Service data is data that is processed by a device to complete a service or other data that describes information (for example, a log of the service) about the service. The service data also includes an instruction because some services are control-type. Data of this type of service is an instruction used for a function of the service, and the instruction may indicate completion of at least one action including editing, transmission, and execution. The data of the service is delivered by an application on a device. In addition, a service requirement is a requirement of the service on one or more types of quality of service (Quality of Service, QoS). For example, a time taken to complete the service, continuity of the service (whether transmission of the service data or the service instruction is interrupted), a bandwidth required for sending the data of the service, and a priority of a network used by the service are all indexes included in the QoS. Different services may have requirements on different QoS indexes, or may have different requirements for a same QoS index.

The connection is briefly defined above, and the connection continues to be described below. The connection may be identified by a quadruple or quintuple. The quadruple includes a source IP address, a source port number, a destination IP address, and a destination port number. The quintuple further includes a name of a transport layer protocol based on the quadruple. An application on one device may simultaneously transmit data to an application on another device by using a plurality of connections because one application includes a plurality of functional modules, and different functional modules may initiate one or more connections based on services of the functional modules. Usually, an application includes a module configured to display an operation interface of the application. A main service is image display and interface control, and a connection may be initiated. If the application further includes a module configured to perform wireless projection, a connection may be initiated to implement wireless projection. If the application can download a file, for example, the application is an "application store (App store), the application includes a module for downloading another application, has a main service of file (an installation package of the application) transmission, and may initiate a connection alone. Certainly, if a plurality of applications need to be simultaneously downloaded, each download task can initiate a connection. In this way, one application may need to simultaneously use a plurality of connections. Certainly, if a connection is to be established, support of a protocol stack and hardware below an application layer is needed.

In addition, a connection goes through a connection establishment phase, a data transmission phase, and a connection termination phase. In this application, a preparation phase of connection establishment is considered as a part of the connection establishment phase. The establishment preparation phase may include network establishment, device discovery, and the like mentioned below. In the connection establishment phase, two devices establish a connection and start data transmission through instruction interaction. In this phase, data transmission performance varies greatly and is unstable. For example, a bandwidth and a congestion window used for data transmission in this phase are gradually increased. In the data transmission phase, transmission performance is relatively stable. Most of data to be transmitted by using a connection is transmitted in this phase. For example, in the data transmission phase, an average value of a bandwidth is equivalent to a maximum value of a bandwidth in the connection establishment phase. Therefore, different algorithms are usually used for congestion control and flow control in the connection establishment phase and the data transmission phase. The connection termination phase is a process in which two devices terminate use of a connection through instruction interaction and release a resource used by the connection.

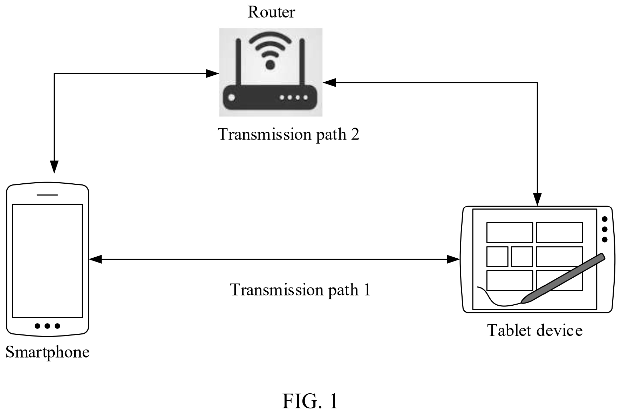

In a near-field wireless network communication environment, a data transmit end and a data receive end directly communicate by using a wireless network (also referred to as a P2P architecture), or a transmit end and a receive end communicate by using a one-hop network device (also referred to as an AP architecture). The network device has functions of network access and data forwarding, that is, provides a network for the data transmit end and the data receive end, and forwards the data from the transmit end to the receive end. Therefore, the network device is referred to as an access point or a forwarding device in this application. The access point may be translated as an access point, referred to as an AP for short, but does not merely refer to an AP in a Wi-Fi technology. Generally, a physical form of the network device is a device. In some implementations, the network device may be deployed in a distributed manner. For example, the network device is in a form of a group of modules or a parent-child device. Some modules or child devices may be placed at an interval of a distance, to increase coverage space of signal strength of the network device. For example, these modules include a module configured to relay a signal, so that the signal of the network device can pass through a wall or cover a larger site. For example, FIG. 1 describes two transmission paths that may be used by a smartphone, a tablet device, and a router as access points. A transmission path 1 is a P2P architecture, and a transmission path 2 is an AP architecture.

A communication technology supported by the network device is not limited in this application. For example, the network device may be a device that supports a Wi-Fi technology, for example, a router, or may be a device that supports the non-third generation partnership project (3rd generation partnership project, 3GPP), for example, a fourth generation (4th generation, 4G) mobile communication technology base station, or a fifth generation (5th generation, 5G) mobile communication technology base station.

In addition, when a P2P architecture is used for communication, a plurality of wireless communication technologies may be used, and are not exhaustively listed in this application. For example, the wireless communication technology that may be used may be a Wi-Fi technology, a wireless cellular network technology, a Bluetooth (Bluetooth) technology, a ZigBee (ZigBee) technology, or even a near field communication (Near Field Communication, NFC) technology in some scenarios. When the wireless cellular network technology is used, two devices no longer perform relay communication by using a base station (base station, BS) but directly perform connection and communication between devices. The P2P architecture in this case is also referred to as a device to device (Device to Device, D2D) technology. In some scenarios, the D2D technology is implemented with the help of one or more of mature wireless communication technologies such as Wi-Fi, Bluetooth (Bluetooth), and ZigBee (ZigBee) is also required to implement the D2D technology. Generally speaking, a process of establishing a connection based on a P2P architecture in most wireless communication technologies is relatively complex and takes a long time.

In contrast, a process of establishing a P2P connection by using an NFC technology is simpler, and a connection establishment time is very short, and is only approximately 0.1 second (s). Currently, a connection establishment time in most wireless communication technologies is several times or even dozens of times that of the connection establishment time. However, the NFC technology is a short-range wireless communication technology, and is used for wireless communication within 10 cm, and an effective communication distance is 4 cm. The NFC technology cannot meet common wireless communication in a case in which devices are separated by dozens of centimeters to more than 10 meters and less than 20 meters. Therefore, the NFC technology requires two devices to be close to each other and is mostly used for instantaneous communication. The NFC technology is commonly used in scenarios such as mobile payment, an electronic label, and access control security. Compared with another wireless communication technology, a scenario in which the NFC technology is used in the method described in this application is very limited. The scenario is different from a scenario described in the background of this application.

This application does not involve an improvement on an existing wireless communication technology and an existing communication architecture. In other words, this application does not improve a process of establishing a connection in a communication architecture by using a wireless communication technology. The method in this application aims to skillfully transmit, in a process of establishing a connection by using one network, a part of data of a service first by using an established connection of another network.

For example, for a specific implementation and detailed descriptions (including a process of establishing a network, a method for transmitting data, and the like) of a network having a Wi-Fi-based P2P architecture, refer to a public technical document, for example, the Wi-Fi network peer-to-peer technical specification (Wi-Fi Peer-to-Peer Technical Specification), version 1.7 (Version 1.7). In some implementations of the D2D technology based on the wireless cellular network, a frequency band of a cellular network needs to be authorized. This is currently not standardized. In some other implementations, one or more of wireless communication technologies such as Wi-Fi, Bluetooth (Bluetooth), and ZigBee (ZigBee) need to be used. Therefore, corresponding communication standards need to be followed. For another example, for a specific implementation and detailed descriptions of communication by using an AP by using a Wi-Fi technology, refer to a public document, for example, the wireless local area network communication standard family IEEE802.11, including 802.11a/b/g/n/p/i and the like.

The technical solutions described in this application mainly involve transmitting service data from one device to another device in a near-field environment. Many networks may be used in the near-field environment. Some networks quickly establish connections, and some networks slowly establish connections. However, a data transmission capability or network stability of a network that quickly establishes a connection may be worse than those of a network that slowly establishes a connection. For example, by using a same communication technology, establishing a connection based on a P2P architecture is slower than establishing a connection based on an AP architecture. The following uses a P2P architecture and an AP architecture as examples to describe a case in which a performance requirement of a service on data transmission cannot be met in an existing solution. In the following, a network based on a P2P architecture is also referred to as a P2P network for short. A connection based on a P2P network, or a connection using a P2P network, is also referred to as a P2P connection for short. A network based on an AP architecture is also referred to as an AP network for short, and a connection based on an AP network is also referred to as an AP connection for short. In a multipath connection scenario, a sub-connection based on a P2P network is also referred to as a P2P sub-connection for short. A sub-connection based on an AP network is also referred to as an AP sub-connection for short.

An P2P architecture is an architecture in which devices are directly connected. That two devices directly communicate with each other rather than by using a third node can enable the two devices to exclusively use one network. In this way, data transmission performance is more stable. However, when direct communication between two devices is implemented by using a wireless fidelity (wireless fidelity, Wi-Fi) technology or some other wireless communication technologies, it takes a relatively long time for the two devices to establish a network through negotiation, and energy consumption for maintaining such a network is high. Communication by using an AP is that the two devices access the network by using the AP for communication, and data transmitted by the two devices is forwarded by using the AP, that is, by using an existing communication network. Because one AP may access another device except the two devices, a communication resource of the AP may be contended for by more devices, and when the two devices transmit data by using the AP, transmission performance is poor in controllability, and is prone to fluctuation. In near-field transmission, a bandwidth of the two devices when a P2P architecture is used is usually better than that when an AP is used.

Therefore, in the conventional technology, even if two terminals in a near field can communicate by using an AP, if a service with a large data transmission volume such as wireless projection or file transmission needs to be performed, the terminal still uses a P2P architecture and a common Wi-Fi network to establish a network and perform transmission. If the P2P architecture is used for networking, a case in which a service requirement cannot be met may occur. As a result, user experience is affected.

For ease of understanding, the following describes two specific scenarios in which a service requirement cannot be met by using communication by using a P2P network based on a Wi-Fi technology as an example. Certainly, a case in which a service requirement cannot be met by using a P2P architecture is not limited to the following scenarios.

A scenario 1 corresponds to the connection establishment phase described above. Two terminals that communicate by using a Wi-Fi-based P2P architecture need to first establish a network before communication. This procedure needs to go through sub-connection procedures such as device discovery, service discovery, and peer-to-peer invitation, and there is no communication channel that can be directly used between the two terminals. In a whole process, signaling interaction takes a long time (usually 4 to 6 seconds), and data cannot be transmitted in a network establishment process. In addition, a success rate of establishing a network by using a P2P architecture is low. Usually, a network fails to be established for the first time, and another try is needed, and even in some cases, a plurality of tires are needed. As a result, in some cases, a taken time is as long as more than 10 seconds. For example, Table 1 shows six test results of a waiting time for projection from a mobile phone to a test device 1 by using a P2P architecture, and six test results of a waiting time for projection from a mobile phone to a test device 2 by using a P2P architecture. Duration in the table indicates a time from triggering a projection instruction (for example, a user taps a projection indication component displayed on a screen) by a mobile phone to displaying the screen of the mobile phone on a projected device. The unit is second (s).

**Table 1**

| | 1 | 2 | 3 | 4 | 5 | 6 |
|---|---|---|---|---|---|---|
| Test device 1 | 8.4 | 10.2 | 4.56 | 12.22 | 4.93 | 12.56 |
| Test device 2 | 5.51 | 4.52 | 20.3 | 4.6 | 4.55 | 4.4 |

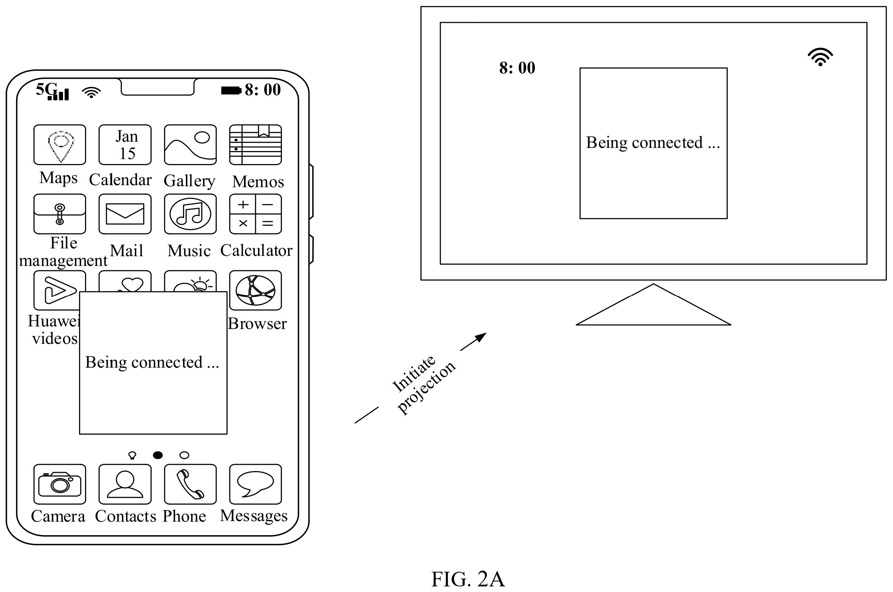

In actual application, such time consumption may be reflected as follows: After a device initiates a projection instruction to another device, such a long period of time needs to be waited for before the another device can display the screen of the device. Alternatively, when a device transmits a file to another device, it takes several seconds to prepare before the file starts to be transmitted. A waiting time is long, service initiation is not smooth, and user experience is poor. FIG. 2A shows that when a connection is established between a smartphone and a smart television by using a P2P architecture, indication boxes on screens of the two devices display being connected. This process starts from initiating screen projection by the smartphone to displaying screen content of the smartphone by the smart television, that is, starting screen projection. It is conceivable that if a user is in an office scenario and is about to report to a customer or a colleague, the user needs to project a material in his laptop to a large-screen electronic device (such as a smart screen) in a conference venue, a waiting time is very suffering for the user.

In the conventional technology, a process of establishing a network by using a P2P architecture is considered to be improved, to shorten a time for establishing a network. For example, in a process in which two devices establish a network by using a P2P architecture, signaling transmission in a connection establishment process is assisted by using an existing network and by using an AP access point accessed by the two devices, thereby accelerating the connection establishment process. However, the process of establishing a network needs to comply with a general description document (such as a technical specification of a wireless network point), and an interaction procedure cannot be randomly deleted or modified. The improvement cannot simplify a process of establishing a connection based on a P2P network, and there is still a problem that the connection cannot be successfully established at one time. Therefore, an improvement effect is limited, and although a connection establishment time can be shortened, a requirement of a projection service cannot be met, and improvement of user experience is not obvious.

To resolve the technical problem in the scenario 1, this application describes a method for transmitting data in a near field. In response to a request of a service, two devices establish a first connection. In a process of establishing the first connection, the two devices transmit data of the service by using an established second connection. When the first connection is successfully established, the data is transmitted by using the first connection. In other words, the data of the service is intended to be transmitted by using the first connection, but it takes a long time to establish the first connection. In this way, the data is transmitted by using the established second connection first, so that data transmission can be started more quickly, and a response time can be shortened. For a user, an instruction (such as screen projection) entered by the user can be responded to more quickly, thereby improving user experience. For the scenario 1, a network used by the first connection is based on a P2P architecture, and a network used by the second connection is based on an AP architecture. In other words, different from the conventional technology, an attempt is made to shorten a time of the process by optimizing a connection process based on a P2P network. In the method described in this application, when a connection is established, data is transmitted by using another network first, and another connection is used together without changing a P2P connection establishment process, thereby better shortening a waiting time of a service and improving transmission performance.

Further, a multipath technology may be used in this process so that two sub-connections of a multipath connection use two different networks. After establishment of a sub-connection using an AP network is completed, data is transmitted by using the sub-connection. An establishment time of a sub-connection using a P2P network is relatively long, but after establishment of the sub-connection using the P2P network is completed, the service transmitted by using the sub-connection using the AP network is switched to the sub-connection using the P2P network, to obtain better transmission performance. The sub-connection using the AP network may be disconnected. In this way, switching from a connection to another connection for data transmission becomes switching from a sub-connection of a connection to another sub-connection of the connection. This not only shortens a waiting time, improves transmission performance, but also ensures smooth service data transmission and smooth service execution, and provides better user experience.

In addition, a solution for a scenario 2 is further discussed in this application.

In the scenario 2, when two devices performs cooperative interaction with each other, a problem that a service requirement cannot be met may occur. This is because cooperative interaction between the two devices usually involves simultaneous transmission of data of more than one service. As a result, a resource of a same network is preempted. Simultaneous transmission means that data of more than one service is being transmitted in a specific time period. In other words, as long as there is a time period in a process of transmitting data of these services, data of more than one service is transmitted in the time period. This is simultaneous transmission. Simultaneous transmission does not require that transmission of data of these services starts at a same moment or ends at a same moment.

After a screen of one device (referred to as a small-screen device, for example, a mobile phone) is projected to another device (referred to as a large-screen device, such as a tablet computer or a smart television), the large-screen device may be used as a screen of the small-screen device, and a screen of the large-screen device is larger than that of the small-screen device. A user may control the small-screen device by operating the large-screen device. For example, if the large-screen device is also a touchscreen, a file on the small-screen device may be opened by touching a control on the screen. Certainly, the file of the small-screen device is still locally stored, and needs to be transmitted to the large-screen device. A transmission process may be understood as a subprocess of opening the file. In this case, because a network between the two devices needs to transmit both an image of the screen of the small-screen device and the file, if a resource of the network cannot fully meet a requirement of the two services on data transmission, data of the two services preempts the network between the two devices. In other words, contention for the resource of the network is generated. For another example, the small-screen device is also a touchscreen, and some gestures (for example, a dragging action of a finger on a screen) may be directly used to trigger the small-screen device to transmit the file to the large-screen device when the screen of the small-screen device is projected to the large-screen device. In a process of transmitting the file, another service whose data needs to be transmitted may be triggered on the large-screen device. For example, an application on the small-screen device displayed on the large-screen device is tapped, that is, a service of opening the application is started. An instruction for opening the application needs to be transmitted to the small-screen device, that is, data of a plurality of services needs to be simultaneously transmitted between the two devices, thereby contending for a resource of a direct network. This contention may slow down file transmission, prolong a waiting time, or enable an instruction of another service not to be transmitted in a timely manner. As a result, control of the large-screen device over the small-screen device is unstable or even invalid. It is found through testing that in some cases, a transmission service, such as file transmission, exclusively occupies a bandwidth of a direct network, to ensure that transmission of a file can be completed as soon as possible. However, a control service, such as projection and application opening, is interrupted. However, there is always a service whose quality is greatly affected or that even cannot run properly. In addition, the impact can be intuitively perceived by a user.

To resolve the technical problem in the scenario 2, this application provides a method for transmitting data in a near field. This method corresponds to a data transmission phase. In a process of transmitting data of a service by using a first network, if data of a plurality of services needs to be transmitted, data of at least one service in the plurality of services is transmitted by using a second network. Certainly, in the plurality of services, data of only one service may be reserved to be transmitted by using the first network, and all data of other services is switched to the second network. In this way, a resource of the first network can be exclusively occupied by a service, so that transmission of data of a service that is still transmitted by using the first network can be completed as soon as possible. For example, the service that is still transmitted by using the first network usually has a relatively high requirement on transmission performance. For example, a higher throughput or more sufficient bandwidth is needed to complete transmission of the service or a service with a large data volume as soon as possible. For example, the service is file transmission. For another example, a service transferred to an AP network for transmission may be a control service, for example, screen projection or device operation. Alternatively, the service that is still transmitted by using the first network may have a higher priority.

Certainly, if transmission of data of a service that exclusively occupies the first network is completed, but transmission of a service that is transmitted by using the second network is not completed, the service that is transmitted by using the second network may be transmitted by using the second network again. For example, the first network is a P2P network, and the second network is an AP network. After all, in a near-field communication scenario, transmission performance of the P2P network is more stable and superior.

Further, a multipath technology may be used in this process. A multipath connection is established between two devices by using the multipath technology. The multipath connection may use two different networks, for example, an AP network and a P2P network. When data of a plurality of services is transmitted by using a sub-connection based on a P2P network, data of at least one service in the plurality of services is switched to a sub-connection based on an AP network. Optionally, service data switched to the AP network may be further switched back to the sub-connection based on the P2P network. In this way, switching of a data transmission path is smoother, transmission of the switched service data is not interrupted, and user experience is better.

In addition, when data of only one service is transmitted, if transmission performance of one network cannot meet a requirement of the service, the data of the service may alternatively be switched to another network for transmission, and after transmission performance of the previously used network is stable, the data of the service is switched back to the previously used network for transmission. This process may also use the MP technology.

In another aspect, for the scenario 2, this application further discloses a method for controlling a device. The method is described from a perspective of interface interaction of a projected device. This method may be considered as manifestation of the foregoing method from the perspective of interface interaction.

The method includes: A projected device displays screen content of a projecting device, and the projected device receives a file from the projecting device. In a process in which the projected device receives the file, a screen of the projected device maintains display of the screen content of the projecting device, and in response to an operation performed by a user on the projected device, changes at least a part of the screen content of the projecting device displayed on the projected device.

Certainly, alternatively, a projected device may display screen content of a projecting device, and the projected device may receive a file from the projecting device. In a process in which the projected device receives the file, a screen of the projected device maintains display of the screen content of the projecting device, and in response to an operation performed by a user on the projecting device, changes at least a part of the screen content of the projecting device displayed on the projected device.

The operation performed by the user on the projected device is actually an operation performed by the user on a control or an area in the screen content of the projecting device displayed on the projected device. The operation performed by the user on the projecting device is an operation performed by the user on a control or an area in the screen content of the projecting device. The operation may be click, double-click, long-press, knuckle tap, scroll, or the like. This is not limited in this application.

In other words, the operation may be performed by the user on the projected device. For example, on a smart television, operating the screen of the projecting device may alternatively be operating, by the user, the screen of the projecting device on the projecting device, provided that there is a service whose data needs to be transmitted, and the service may occur on either of the two devices. After the operation is generated, the projected device makes a response corresponding to the operation in a timely manner instead of frame freezing. This indicates that transmission of data of a plurality of services does not affect each other, and quality of service of the services can be met.

In some implementations, maintaining the display of the screen content of the first device may include zooming out the screen content, or changing a display form such as an orientation or a color of the screen content.

The file is a set of data that has a certain format and that can be identified or processed by an application program. The file may be a picture, a video, an audio, a compressed package, a document in various formats or types, an applet, a web page link, or the like.

In a process in which the projected device receives the file from the projecting device, screen projection does not stop, and the projected device does not fail to respond to control performed by the user over the screen of the projecting device on the projected device because the projected device needs to receive the file. In this way, frame freezing of a service is reduced, and user experience is improved. In fact, frame freezing of the service is caused because data of a plurality of services all need to be transmitted. As a result, a network resource is preempted, and data of some services cannot be transmitted to the projected device in a timely or smooth manner.

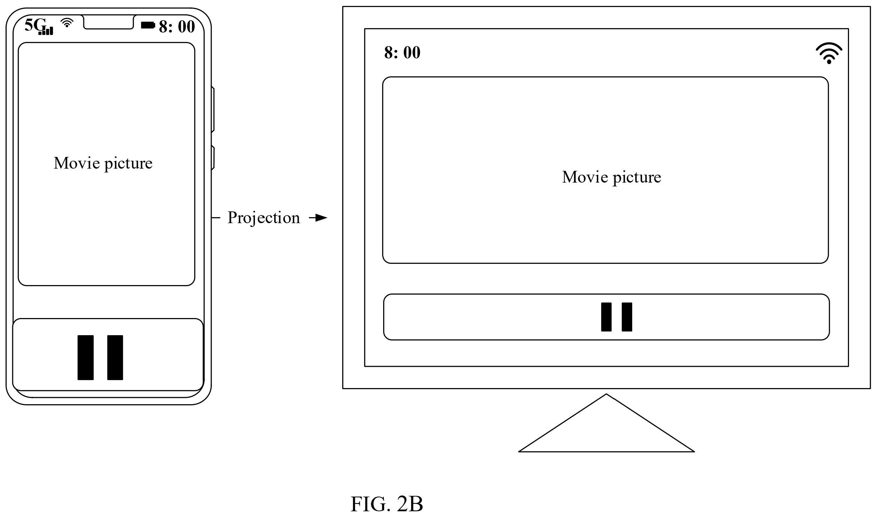

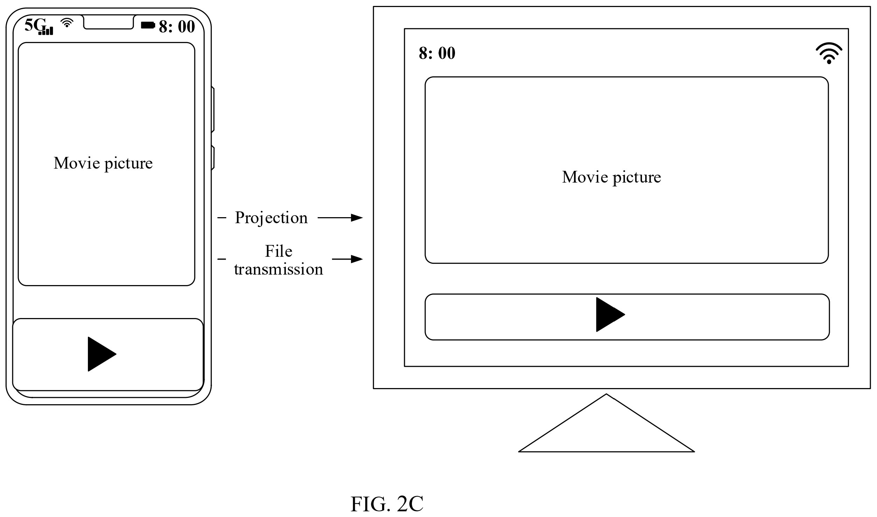

FIG. 2B and FIG. 2C describe an example of the method for controlling a device. In FIG. 2B, a smartphone on the left projects a movie that is being played on the smartphone to a smart television on the right. A screen of the smartphone displays a same movie picture as a screen of the smart television, and a control component used to control playing of the movie is displayed under the movie picture of either the smartphone or the smart television. The control component displays a graphic indicating that the movie is playing. In the figure, two short vertical bars are shown.

In FIG. 2C, in a process of projecting the movie, the smartphone on the left sends a file to the smart television. For example, the file is a photo stored in the smartphone. Because the movie is currently playing, transmission of the photo is not indicated in a form of an icon on the screens of the two devices. In a process of transmitting the photo, a user taps the control component that is used to control playing of the movie and that is on the screen of the smartphone or the smart television, to pause the movie. By using the foregoing method, when the user taps the control component on the smartphone or the smart television, movie pictures of the two devices are paused, and graphics displayed by the control components of the two devices simultaneously change and become icons indicating that playing of the movie is paused. In the figure, a triangle pointing to the right is shown. Therefore, another service, that is, transmission of picture data, does not interrupt projection between the two devices, and in this process, data of another initiated service, that is, control over pause of the movie, may also be transmitted in a timely manner. A requirement of the service of control over pause of the movie on quality of service (that is, real-time) can be met.

The system architecture and the service scenario described in this application are intended to describe the technical solutions in this application more clearly, but does not constitute only one limitation on the technical solutions provided in this application. Persons of ordinary skill in the art may know that with evolution of the system architecture and emergence of a new service scenario, the technical solutions provided in this application are also applicable to similar technical problems.

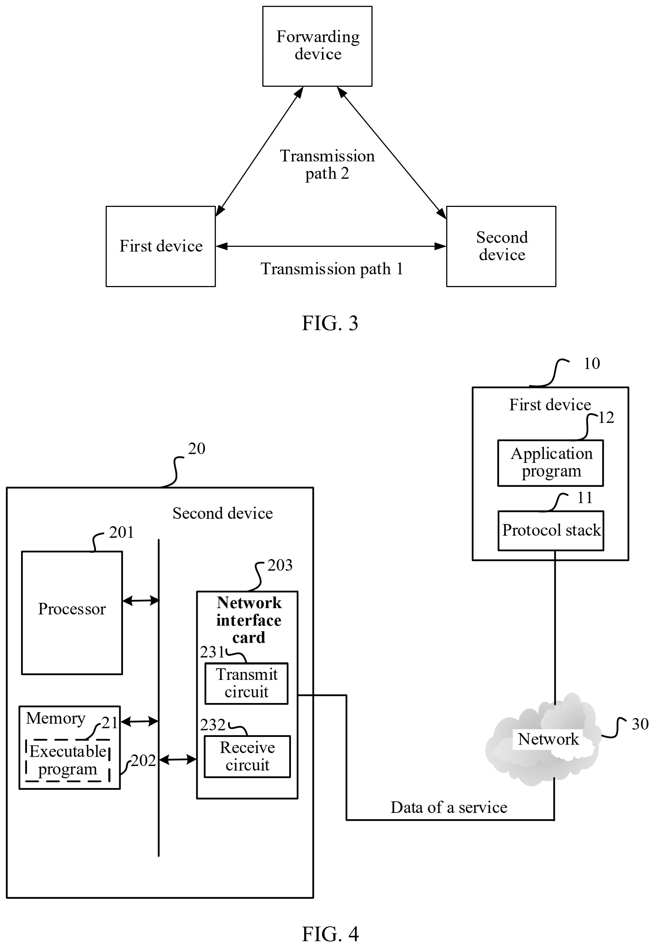

Based on FIG. 3, the following describes a system architecture to which the technical solutions of this application are applicable. FIG. 3 includes two devices and one forwarding device. The two devices may directly communicate with each other (shown as a transmission path 1 in the figure), or may communicate with each other by using the forwarding device (shown as a transmission path 2 in the figure). The two devices may be referred to as a projecting device and a second device. The two devices may both send data and receive data. The transmitted data includes but is not limited to various files, for example, a document, a video, audio, mobile phone clone data, or a picture. The forwarding device may be a non-third generation partnership project (3rd generation partnership project, 3GPP) device, for example, a Wi-Fi device. Alternatively, the forwarding device may be a 3GPP device, for example, a fourth generation (4th generation, 4G) mobile communication technology base station or a fifth generation (5th generation, 5G) mobile communication technology base station.

The projecting device and the second device may be communication devices with a wireless communication function, and are usually terminals. The terminal may include desktop, laptop, handheld, and vehicle-mounted user equipment (User Equipment, UE) devices and the like, such as a smart phone, a cellular phone, a smart watch, a desktop computer, a tablet computer, a smart television, a smart television box, an ultra-mobile personal computer (Ultra-mobile personal computer, UMPC), a notebook computer, a personal digital assistant (Personal Digital Assistant, PDA), a portable multimedia player (Portable Multimedia Player, PMP), a dedicated media player, a consumer communication device, a wearable device, and an AR (augmented reality)/VR (virtual reality) device.

A specific form of the forwarding device may be a complete device, a chip or a chip system that may be disposed in the device, or a component that has a function of the forwarding device described above. The forwarding device may be one of the following examples: an access point (access point, AP) in a wireless fidelity (wireless fidelity, WiFi) system, such as a home gateway, a router, a server, a switch, or a bridge, an evolved Node B (evolved Node B, eNB), a radio network controller (radio network controller, RNC), a Node B (Node B, NB), a home base station (such as a home evolved NodeB or a home Node B, HNB), a baseband unit (baseband unit, BBU), a wireless relay node, a wireless backhaul node, a transmission point (transmission and reception point, TRP or transmission point, TP), a gNB or a transmission point (TRP or TP) in 5G such as a new radio (new radio, NR) system, one antenna panel or one group of antenna panels (including a plurality of antenna panels) of a base station in a 5G system, and the like.

FIG. 4 shows an implementation of main components of two devices to which an embodiment of the present invention is applicable. Only an application and a protocol stack in a projecting device 10 are shown. Hardware included in a second device 20 is shown, and is specifically a processor 201, a memory 202, and a network interface card (network interface card, NIC) 203. It should be understood that the hardware in the second device 20 also exists in the projecting device 10, and specific models may be different. The network interface card 203 includes a transmit circuit 231 and a receive circuit 232. The memory 202 stores an executable program 21. The executable program 21 includes an application, a protocol stack (Protocol Stack), and an operating system. The processor 201 may run the executable program 21 in the memory 202, to implement a plurality of functions. Data of a service may be transmitted by using a network 30 in a near-field wireless communication environment between the projecting device and the second device. The projecting device and the second device include one or more physical network adapters. A physical network adapter may provide one or more network interfaces for an upper layer of a protocol stack to use. Each network interface can use a network. In other words, at least two network interfaces need to be used in the solutions of this application. The two network interfaces may be network interfaces of a virtual network adapter or network interfaces of a physical network adapter. An implementation of the network interface is not limited in this application, provided that different network interfaces can use different networks to transmit data. For example, the two network interfaces belong to different network adapters.

It should be understood that only an example is shown in FIG. 4, and in actual application, the communication device may have more or fewer components than those shown in FIG. 4, or two or more components may be combined, or a different component configuration may be used.

To establish a connection between the device 10 and the device 20 and transmit data based on the established connection, a plurality of network protocols need to be used. These protocols are combined based on layers to form an internet protocol suite (Internet Protocol Suite), and a component that implements a function of the internet protocol suite is referred to as a protocol stack. For example, data of a service generated by the second device 20 is encapsulated into a packet after being processed by the protocol stack, and the packet is sent to a terminal 10 by using the transmit circuit 231 of the network adapter 203. The projecting device 10 receives, from the network 30, the packet sent by the second device 20, parses, through processing by a protocol stack 11, the data of the service carried in the packet, and reports the data of the service to an application 12. The protocol stack may be implemented by an appropriate combination of software, hardware, and/or firmware. The executable program 21 includes a software part of the protocol stack.

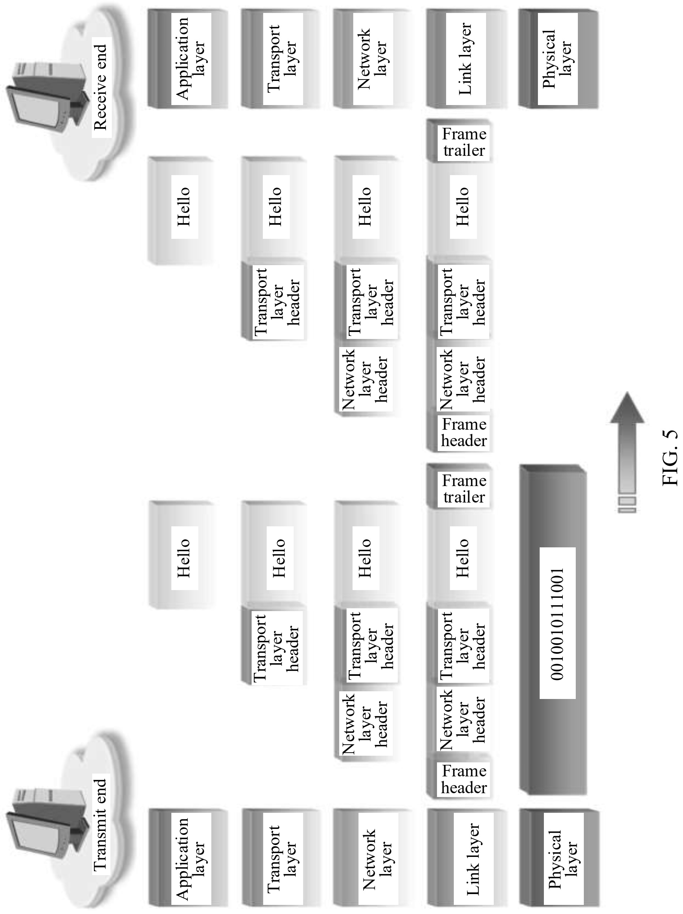

In an implementation, the protocol stack, for example, the protocol stack 11 shown in FIG. 4, is a transmission control protocol/internet protocol (Transmission Control Protocol/Internet Protocol, TCP/IP) protocol stack. The TCP/IP protocol stack is a protocol stack implemented by referring to a protocol suite defined in a TCP/IP reference model. The protocol suite includes two core protocols: the TCP (transmission control protocol) and the IP (internet protocol). Based on a definition in the TCP/IP reference model, protocols included in the protocol suite are classified into five abstract "layers": a physical layer, a link layer, a network layer, a transport layer, and an application layer. Definitions of the layers are all the current technologies, and details are not described in this embodiment of the present invention. For example, the application program 12 interacts with the transport layer by using a standard socket application programming interface (Standard Socket Application Programming Interface, Standard Socket API) of the application layer. The standard socket application programming interface is also referred to as a socket (Socket), an application interface, or an API for short in the industry. The API may have many different designs, for example, usually may include a plurality of implementations such as a function, a constant, a variable, and a data structure. The protocol stack in this embodiment of the present invention is not limited to the TCP/IP protocol stack. Other protocol stacks, such as a protocol stack based on an open system interconnection reference model (Open System Interconnection Reference Model, OSI), are all applicable to the method in this embodiment of the present invention. As shown in FIG. 5, if a protocol stack 204 is a TCP/IP protocol stack, for a downlink packet of a transmit end, an application of the transmit end delivers data to the protocol stack, and the protocol stack adds a header and/or a frame trailer to the data based on protocol specifications of the layers of the TCP/IP protocol, to generate the downlink packet. However, for an uplink packet (sent by the transmit end to a receive end) of the receive end, the protocol stack removes a header and/or a frame trailer of the uplink packet from the packet based on the protocol specifications of the layers, to parse data and report the data to the application. In FIG. 5, the data carried in the packet is data "Hello" generated by the application.

This application focuses on processing logic of the application layer and the transport layer in the protocol stack. The transport layer receives data of a service from the application layer, and determines a network used to transmit the data, to distribute the data to a network interface corresponding to the network. A subsequent processing process of the data is performed by a protocol stack and hardware below the transport layer. For a specific implementation, refer to an existing data sending process.

The following describes an implementation of the method in this application by using two networks as an example. One network is based on a P2P architecture, and the other network is based on an AP architecture. The data of the service is delivered from the application layer. Specifically, the application layer may be a plug-in of an operating system, or an application dedicated to projection, or may be a functional module in an application not dedicated to projection. For example, some video applications, audio applications, and picture applications already include a projection function. A forwarding device is an access point (Access Point, AP) of a Wi-Fi network, and the projecting device and the second device are two terminals. For example, the access point is a router, the projecting device is a smartphone, the second device is a smart display device that has a built-in operating system or an external operating system, and a screen of the smart display device is larger than that of the smartphone.

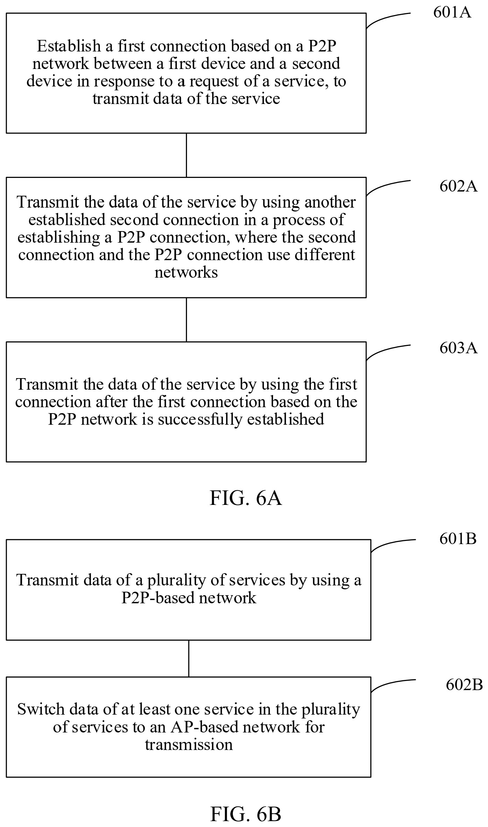

For the scenario 1, the proposed method for transmitting data includes the following steps, and a corresponding schematic diagram is FIG. 6A.

Step 601A: In response to a request of a service, a first connection based on a P2P network is established between a projecting device and a second device, to transmit data of the service.

The P2P network is basically established when the P2P network needs to be used, because a network that maintain this architecture is power-intensive, and is a network in which two devices are directly connected. The network cannot be established when it is unclear which two devices communicate.

The following briefly describes a network establishment process involved in a process of establishing a connection based on Wi-Fi by using a Wi-Fi network as an example. Establishment of a P2P network based on Wi-Fi includes device discovery and formation. Device discovery includes a scan phase (Scan Phase) and a find phase (Find Phase). Formation includes a GO negotiation (Negotiation) phase and a provisioning (Provisioning) phase.

In the scan phase, two devices send a probe request (Probe Request) frame on all frequency bands (for example, frequency bands 1, 6, and 11 of 2.4 GHz) supported by the devices, to quickly discover a surrounding group. This is referred to as a search state (Search State), and a frequency band on which the probe request frame is sent is referred to as a social channel (Social Channels). In the scan phase, neither device processes the probe request frame received from another device. In the search phase, the two devices switch back and forth between the search state and a listen state. Certainly, the two devices master a switchover rhythm and do not need to be synchronized. In the listen state, the device randomly selects a frequency band (for example, one of frequency bands 1, 6, and 11) to listen to the probe request frame and replies with a probe response (Probe Response) frame. The selected frequency band is referred to as a listen channel (Listen Channel). Once the listen channel is selected, the listen channel cannot be changed in the entire device discovery phase. In a WiFi-based P2P architecture, the two devices are defined as two roles: a group owner (Group Owner, GO) and a client (Client). The group owner may establish a P2P connection with one or more clients. In the GO negotiation (Negotiation) phase, the two devices negotiate who is the GO, and negotiate some information about communication in a group, for example, an operating channel (Operating Channel) that can be used by the group, and a time for which the group can last. In the provisioning (Provisioning) phase, the two devices exchange security configuration information based on a result obtained through negotiation during device discovery. In this way, the client may be associated with the GO by arranging the configuration information, and then establish a Wi-Fi-based P2P connection.

In the scan phase, a request frame from anther device cannot be replied, and in the search phase, device discovery can be completed after a plurality of times of state switching. If a device does not receive an acknowledgment frame within 100 ms after sending a GO negotiation request frame, it is considered that this negotiation fails, and the GO negotiation request frame needs to be resent. It can be learned that a process of establishing a P2P network and establishing a connection based on the P2P network takes a relatively long time.

For another example, a connection establishment process of a D2D technology based on a wireless cellular network also includes device discovery, and the process also takes a relatively long time. In the D2D technology, a base station may participate in device discovery. In an implementation, the base station first indicates user equipment that needs to establish a D2D network to send a discovery frame used for device discovery, and then specifies some user equipments near the user equipment to receive the discovery frame. In another implementation, the base station periodically broadcasts information used to establish the D2D network, to guide two user equipments. User equipment that needs to establish a D2D connection sends a discovery frame, receives a discovery frame, and sends a response frame based on information broadcast by the base station. In the D2D technology, alternatively, two user equipments may perform device discovery.

How to establish a P2P connection based on a network communication technology belongs to the conventional technology. The technical solution of this application does not involve an improvement to the process, and the process is not further described herein.

For the two devices, completion of establishment of the P2P network is to separately allocate a network adapter and a network interface that correspond to the P2P network in the two devices. An identifier of the network interface corresponding to the P2P network is also registered in an operating system and can be sensed by a protocol stack. In this application, the identifier of the network interface corresponding to the P2P network is schematically p2p-0. The protocol stack uses the registered network interface to transmit data by using the P2P network.

Step 602A: In a process of establishing the P2P connection, the data of the service is transmitted by using another established second connection, where the second connection and the P2P connection use different networks.

In this embodiment, the second connection uses an AP network based on a Wi-Fi technology. The AP network is provided by a Wi-Fi access point.

Before data is transmitted by using the AP network, the two devices need to access a same AP network, for example, a same Wi-Fi local area network, based on a access point. A process of accessing the same AP network and transmitting the data by using the AP network is relatively fast. Because the AP network already exists, the two devices are configured with network adapters used to access the AP network and corresponding network interfaces, provided that binding or allocation is performed based on a name of an actually used AP network. In this application, an identifier of the network interface of the AP network is schematically wlan-0. From another perspective, implementation of the two steps overlaps in time. It may be considered that two processes of establishing the P2P connection and transmitting data by using the AP network are parallel.

For implementation of using the AP network based on the Wi-Fi technology and transmitting data, refer to the conventional technology. Simply speaking, the two devices are associated with the AP device to access a local area network in which the AP is located. In a process of accessing the local area network in which the AP is located, an associated device needs to search for a surrounding Wi-Fi signal and send a connection request by using the AP. If a WEP protocol or a WAP protocol is used, the two devices need to enter a password to join the local area network in which the AP is located. The AP authenticates the two devices, and allocates a dynamic internet protocol (Internet Protocol, IP) address to the two devices by using the dynamic host configuration protocol (Dynamic Host Configuration Protocol, DHCP). In this way, a process of accessing a local area network is completed. After that, before a connection is established based on the accessed AP network, device discovery also needs to be performed based on a corresponding protocol. However, because the two devices are already connected to the same AP, an instruction (for example, an instruction in the device discovery phase and an instruction used for authentication between the two devices) in a preparation phase before a connection is establishment between the two devices is transmitted by using the AP, so that the preparation phase can be completed quickly. A device also uses the AP to send a connection establishment request to another device. After receiving the request, the another device returns, by using the AP, a response to a device whose data needs to be transmitted, thereby completing connection.

In the foregoing process, establishment of the P2P connection and establishment of the AP connection need to use different network adapter interfaces.

In addition, in a process of transmitting data by using the AP network, whether the P2P network is established or whether the P2P network is ready needs to be monitored. This may be implemented by using the conventional technology, and details are not described herein. For example, the following manner may be used: listening to a status of a network interface corresponding to the P2P network by using a thread or a process or receiving a notification from an operating system, and sending obtained information to a protocol stack or an application.

Compared with the first connection that is being established, the second connection based on the AP network is already established. A process of establishing the second connection may start after an instruction of a service is delivered, or may start at an earlier time.

Step 602A is a key point in the technical solution. First, data is transmitted by using the AP network, and in this process, a process of establishing the P2P connection is executed. In this way, data transmission is not delayed due to slow establishment of the P2P connection.

Step 603A: After the first connection based on the P2P network is successfully established, the data of the service is transmitted by using the first connection.

In an implementation, after establishment of the P2P network is completed, a corresponding network interface is registered in an operating system, the operating system may issue a notification to notify a protocol stack or an application, and the protocol stack may establish a first connection between applications running on the two devices based on a network interface allocated to the P2P network and an instruction delivered by the application. After establishment of the first connection is completed, the data is transmitted by using the first connection. For example, all data transmitted over the second connection in step 602A may be switched to the first connection for transmission.

It can be learned from the foregoing descriptions that a step number does not represent an execution sequence of the step. For example, step 602A may be completed in a process of performing step 601A, or the foregoing process of establishing the second connection may be started first, and then the foregoing process of establishing the first connection is started. A key is that, in a relatively time-consuming process of establishing the first connection, data is transmitted by using the second connection first.

In this way, in view of a disadvantage that an establishment time of the connection based on the P2P network is long, the foregoing method does not directly optimize a procedure of establishing the P2P network connection. Instead, it is proposed that in a process in which the two devices establish the connection based on the P2P network, the two devices also establish a connection based on an existing AP network and transmit data by using the AP network. When the connection based on the P2P network is successfully established, the data is switched to the P2P network for transmission. In this way, the data is transmitted by using the AP network first without changing the P2P network establishment and connection establishment processes, and the AP network and the P2P network are cooperatively used in the whole process. The method can avoid an excessively long waiting time in the process of establishing the P2P network connection as well as using a transmission performance advantage of the P2P network, to respond to an instruction (such as projection) entered by the user more quickly, and start data transmission as soon as possible (for example, display a screen on a device with a larger screen as quickly as possible), thereby shortening a waiting time.

The foregoing method procedure is a new data transmission manner described in this application, and may be stored in a protocol stack in a form of code for invoking. In actual application, an application may be used to indicate to invoke a corresponding method for transmitting data described in this application, to avoid waiting for establishment of the first connection according to an existing procedure. The application may deliver an instruction to the protocol stack to start the procedure of establishing the P2P connection. The application delivers the instruction to the protocol stack by using the foregoing application interface.

In an implementation, a thread or a process at an application layer indicates, to a transport layer by using an application interface, that a connection needs to use the method for transmitting data described in this application, that is, in the process of establishing the P2P connection, establishment of the AP connection is also started. and data is transmitted by using the first established AP connection. A dedicated socket may be designed to implement the function, or a parameter may be carried in a general socket to implement the function. This is not limited in this application. For example, a value of a type of the general socket may be used for indication, or a parameter setsocketopt may be set for indication. An instruction for establishing a connection and an identifier of a to-be-established connection are transferred to the transport layer by using the dedicated or general socket. Based on the socket, the transport layer may establish a corresponding connection by using the foregoing method and transmit data. In an implementation, the identifier of the connection may be indicated by using a quadruple of the connection. In another implementation, the identifier of the connection is indicated by using a file descriptor (file descriptor, FD) of the socket.

In some implementations, a device may run a program to obtain a current status of an application (referred to as a projection application for short) on which projection needs to be performed. For example, the status is that the projection application is started or the projection application is ready to establish a connection in a near-field environment. All these may be considered as triggering generation of a projection service request. In some implementations, a device may further run a program to determine whether data of a service to be executed by an application is transmitted by using a P2P network or is transmitted by exclusively using a P2P network. Both obtaining the status and determining a network that needs to be used to transmit service data help manage the foregoing procedure, so that the application and the operating system are clear when there is a requirement for using the foregoing method. In other words, the application and the operating system are clear when a request of a service "projection" needs to be generated.

In addition, in the foregoing method, in addition to determining whether the P2P network is established and whether the P2P connection is ready, the device may further determine, based on quality of service (Quality of Service, QoS) of a service to be transmitted and transmission performance (which may include at least one of a bandwidth, signal strength, and a delay) of the two networks, which network is more suitable for transmission of the service to be transmitted. Certainly, in some scenarios, the P2P network may be used as much as possible when various services can use the P2P network by default. These may be implemented by using the conventional technology, and details are not described in this application.

In addition, for the scenario 2, the proposed method for transmitting data includes the following steps, and a corresponding schematic diagram is FIG. 6B.

Step 601B: Data of a plurality of services is transmitted by using a P2P-based network.

Step 602B: Data of at least one service in the plurality of services is switched to an AP-based network for transmission.

In some implementations, the method may further include step 603B: After transmission of data of a service that is not switched is completed by using the P2P network, if transmission of data of the service that is switched to the AP network for transmission is not completed, the service whose transmission is not completed is switched back to the P2P network for transmission. If transmission of the data of the service that is switched to the AP network for transmission is completed, no action is required.

In the foregoing method, the data of the plurality of services all needs to be quickly transmitted to another device, but some services require better transmission performance. When the data of the plurality of services is all transmitted by using the P2P network, a transmission resource is preempted. In the foregoing method, the data of the at least one service in the plurality of services is switched to the AP network for transmission. Certainly, in the plurality of services, data of only one service may be reserved to be transmitted by using the P2P network, and all data of remaining services is switched to the AP network. In this way, a part of a resource of the P2P network can be released, and transmission of data of a service that is still transmitted in the P2P network can be completed as soon as possible, thereby ensuring transmission performance.

For example, a service reserved to be transmitted in the P2P network usually has a relatively high requirement on transmission performance in a certain aspect. For example, in some scenarios, the service is a service that requires a higher throughput or more sufficient bandwidth, or a service that has a relatively large data volume. For another example, in some scenarios, the service is file transmission. For another example, a service transferred to the AP network for transmission may be a control service, for example, projection or device operation.

In an implementation, a device may be clear about services that need to be preferentially transmitted by using the P2P network or that have a relatively high requirement on transmission performance in a certain aspect. Specifically, a part of code of an application or an operating system in the device may maintain a relationship between a service and transmission performance, for example, a correspondence between an identifier of the service and a transport network that need to be used by the service. Alternatively, a priority of a service is stored, and the priority of the service may be used to distinguish a requirement of the service on transmission performance. This application does not limit how the application or the operating system distinguishes or indicates that the P2P network needs to be preferentially used for transmission, or having a relatively high requirement on transmission performance in a certain aspect.

The identifier of the service is used to distinguish different services, may indicate a name, a function, or a type of the service, and certainly, may alternatively be a simple number or a code. An implementation of the identifier of the service is not limited in this application.

In the correspondence, the two networks may be indicated by using "P2P" and "AP" directly, identifiers of the networks, identifiers of connections corresponding to the networks, identifiers of respectively corresponding network adapters or network interfaces that access the two networks, or another parameter that has a correspondence with the networks. How to indicate the transport network is not limited in this application.

In addition, the device may store indexes of quality of service requirements of various services, including at least one of a bandwidth, a throughput, a round-trip delay, a packet loss rate, and jitter (jitter).

The application indicates, by using an API of an application layer, that a service whose protocol stack service identifier is Proc 1 and that is at a transport layer needs to be transmitted by continuously using the P2P network. For example, a service identifier indication may be carried by using a dedicated API.

The transport layer determines whether a quality of service requirement of another service (whose identifier is Procs) that is currently being transmitted and that is other than the service Proc 1 can be met by a currently available AP network. A quantity of the another services may be one or more. Specifically, a protocol stack may obtain, by using an interface or one or more threads or processes, a performance index of an AP network that is collected by hardware of the device. The performance index may be at least one of signal strength, a bandwidth, a throughput, a round-trip delay, a packet loss rate, and jitter (jitter). The protocol stack may calculate, based on the collected performance index, whether the AP network meets the quality of service requirement of the another service. Information indicating the quality of service requirement of the another service is provided by an application.

The protocol stack accesses the AP network by using a network adapter corresponding to the AP network, and switches data of a part of a service that can be met by the currently available AP network to the AP network for transmission, and data of the service Proc 1 continues to be transmitted by using the P2P network. The part of the service may be all or a part of other services.

When monitoring that transmission of the data of the service Proc 1 is completed, the application may indicate the protocol stack to switch the data of the service that is switched to the AP network and whose transmission is not completed back to the P2P network for continued transmission. Specifically, that transmission is completed herein may mean that the data has been sent out of the device, that the data has entered a corresponding transport layer sending queue from a sending buffer of the application, or that after completing sending of the data of the service, the device has received a feedback from another device indicating that the sent data has been received.

In addition, the process of switching data of a service from one network to another network mentioned in the foregoing method involves using different networks. Using different networks corresponds to different network adapter interfaces, and different sending queues and receiving queues. The protocol stack only needs to deliver the data of the service received from the application to a sending queue corresponding to the AP network or the P2P network, and may send the data by using a corresponding network and by using a corresponding network interface and a corresponding network adapter. Therefore, the protocol stack may switch, by switching a sending queue of the data of the service and controlling hardware to perform a further action, a network used for transmitting the data of the service. Certainly, because the switched sending queue corresponds to a new connection, the data of the service needs to be retransmitted.

In actual application, data of a plurality of services of the application need to be simultaneously transmitted, but data of a part of the services need to be preferentially transmitted by using the P2P network. Alternatively, in a process of transmitting a service, the application triggers another service whose data needs to be transmitted. Therefore, the data of the plurality of services need to be simultaneously transmitted in a period of time. These services have different requirements on transmission performance, and some services, as described above, need more network resources to ensure transmission.

Although the foregoing methods for the scenario 1 and the scenario 2 are described separately and are also specific to different scenarios, the two methods may also be used in combination. In other words, the method for the scenario 1 may be used in an establishment phase of the two connections, and the method for the scenario 2 may be used in a data transmission phase after the two connections are established. In this way, a problem that transmission performance of the P2P network in near-field transmission is low and a service requirement cannot be met can be better resolved.

In some implementations, a multipath protocol (Multipath Protocol) technology may be used in the foregoing method, so that data transmitted over two networks is transmitted by using one multipath connection. In other words, the multipath connection includes two sub-connections, and the two sub-connections use different networks. In this way, switching between the two networks does not interrupt data transmission and has less impact on data transmission, and service implementation is smoother. Certainly, in this case, the two devices need to support the MP technology. For example, protocol stacks of the two devices need to include code for implementing a multipath protocol.

For the scenario 1, the connection established based on the P2P network and the connection established based on the AP network are sub-connections that belong to a same multipath connection. The two sub-connections are uniformly managed at a transport layer by using the MP technology. First, a sub-connection of the multipath connection is established by using the AP network, and the data of the service is transmitted on the sub-connection. After another sub-connection is established by using the P2P network, the data of the service is switched from the sub-connection using the AP network to the sub-connection for transmission. The sub-connection based on the AP network may be disconnected, or a use priority of the sub-connection may be lowered. The switching is controlled by the protocol stack that supports the MP technology.

For the scenario 2, first, data is transmitted by using the sub-connection based on the P2P network. When a service needs to be switched to the AP network for transmission (for example, a new service whose data needs to be transmitted is generated), data of one or more services continues to be transmitted by using the sub-connection based on the AP network. After transmission of the data of the service that is transmitted based on the P2P network is completed, the data of the one or more services continues to be transmitted by using the sub-connection based on the P2P network. The protocol stack may distinguish data of different services, and may also place data of different services into sending queues of different sub-connections.

After the MP technology is used, the device can switch between networks used for data transmission more flexibly and conveniently. For example, one of the sub-connections is interrupted, a sub-connection used by a service is directly changed, or different priorities are set for network interfaces corresponding to the two sub-connections, so that management is more convenient. In the foregoing scenario, a network interface corresponding to the P2P sub-connection may be set to be superior to a network interface corresponding to the AP sub-connection. In this way, when the two sub-connections are both available, the device may preferentially transmit data by using the P2P sub-connection. The protocol stack may further adjust a priority of the sub-connection based on an event or a condition. The event or the condition may be obtained from an application, underlying hardware, or another module in an operating system.

After the MP technology is used, a function of the transport layer in the protocol stack is executed by a multipath transport layer, so that the multipath connection can be established and managed. Specifically, it may be understood that the transport layer is replaced by the multipath transport layer, or that an MP layer is added to the transport layer, and the transport layer is referred to as the multipath transport layer. The application layer and the multipath transport layer also interact with each other through a standard socket application programming interface (Standard Socket API). The multipath transport layer includes the MP layer mentioned above, configured to control the entire multipath connection, and a sub-connection layer, configured to control the sub-connection. The sub-connection layer may use one or more of the foregoing single-path transport layer protocols, for example, the TCP or the UDP mentioned above. The MP layer uses the MP technology to manage a sending queue and a receiving queue of the entire multipath connection, and the sub-connection layer manages sending queues and receiving queues of a plurality of sub-connections. The MP layer uses a scheduler (scheduler) to determine how to schedule the sub-connection layer. The scheduler may access a status of each sub-connection, for example, a congestion window (congestion window, CWND) or a round-trip time (Round-Trip Time, RTT). The scheduler further distributes data in a sending queue of the MP layer to the sending queues of the sub-connections, and collects data received by the sub-connections and provides the data to a receiving queue of the MP layer.

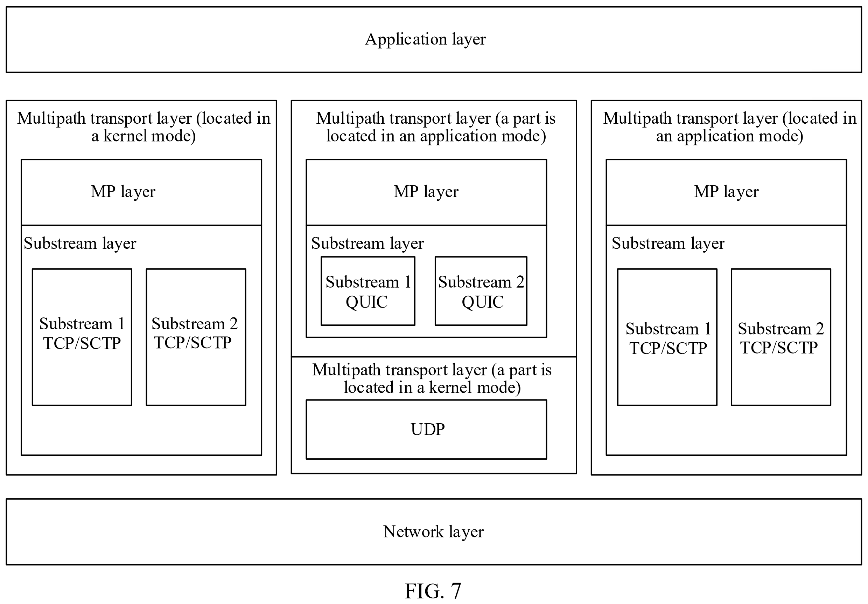

From a perspective of the operating system, the application layer of the protocol stack is located in an application state of the operating system. The multipath transport layer has a complex situation. The entire multipath transport layer may be in a kernel mode or an application mode, or a part may be in an application mode, and a part may be in a kernel mode. Protocol stacks below the multipath transport layer are in a kernel mode. FIG. 7 illustrates three implementations of the multipath transport layer. Each implementation includes an MP layer and a sub-connection layer. The sub-connection layer in each implementation schematically shows two sub-connections managed by the sub-connection. FIG. 7 further shows an application layer and a network layer that are adjacent to the multipath transport layer and that are in the protocol stack. The devices shown in FIG. 1 to FIG. 4 may include any one of the three multipath transport layers. For brevity, the application layer and the network layer in FIG. 7 are uniformly shown in the three implementations. A left part shows a multipath transport layer in a kernel mode, and a managed sub-connection uses the TCP or SCTP protocol. A middle part shows an MP layer in a user mode, a managed sub-connection uses the QUIC protocol, and the kernel mode uses the UDP protocol. A right part shows a multipath transport layer in a user mode, and a managed sub-connection uses the TCP or SCTP protocol.

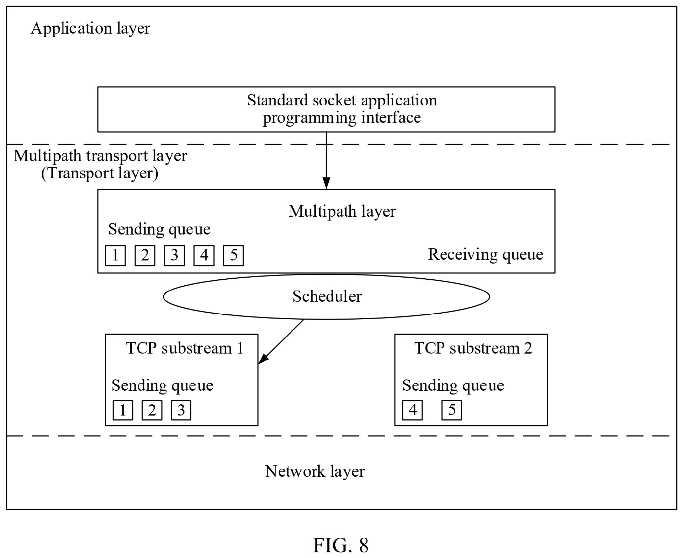

The multipath transmission control protocol (Multipath Transmission Control Protocol, MPTCP) is common in the MP technology. A name of the protocol indicates that the protocol uses the MP technology, and a sub-connection uses the TCP protocol. FIG. 8 uses the MPTCP protocol as an example to show an application layer, a standard socket application programming interface, a multipath transport layer (which is still referred to as a transport layer in the standard), a scheduler, and a network layer of a protocol stack. At the multipath transport layer, a sending queue of the MP layer includes five data fragments (whose identifiers are 1, 2, 3, 4, and 5). The MP layer allocates the five pieces of data to two sub-connections by using the MPTCP scheduler. FIG. 8 shows that data whose identifiers are 1, 2, and 3 is allocated to a TCP sub-connection 1, and data whose identifiers are 4 and 5 is allocated to a TCP sub-connection 2.

More MPTCP-related content is recorded in an existing standard (for example, a document RFC.6824 of an IETF standard organization). For descriptions of the MP technology in this application, refer to this document.

The MP technology is mostly used in wireless communication in a far-field environment. In the far-field environment, two devices are far apart. A link starts from one device and passes through a plurality of forwarding devices before reaching another device. A network environment through which the link passes is complex and changeable. However, in the near-field environment described in this specification, two devices may be directly connected or communicate with each other by using only one forwarding device. In addition, in the far-field environment, a network, such as Wi-Fi and various cellular networks, that is to be used by a sub-connection to transmit data is already laid, a device only needs to access a network by using a network adapter, and the network does not need to be established first. Therefore, a using scenario of the existing MP technology does not involve a case in which in the near-field environment described in this application, a request of a service has been sent, but a network for data transmission is not ready, and as a result, a service waiting time is long. In addition, the using scenario of the existing MP technology does not involve a problem that, in a P2P architecture in the near-field environment, a part of transmission data of a plurality of services exclusively occupies a transmission resource, and consequently, another service is interrupted or quality of service cannot be guaranteed.

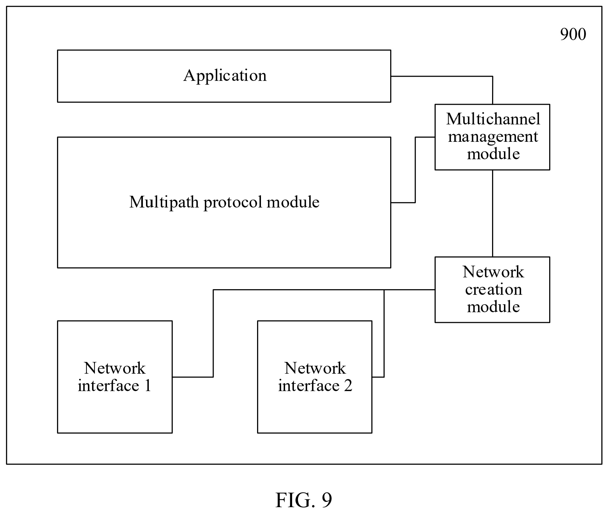

The following describes an architecture of a device to which this application is applicable when the MP technology is used. FIG. 9 is a schematic diagram. A device 900 of FIG. 9 shows an application, a multichannel management module, a multipath protocol module, a network creation module, and two network interfaces (a network interface 1 and a network interface 2). The multipath protocol module corresponds to the foregoing multipath transport layer. A specific implementation of the foregoing modules is not limited in this application. The multichannel management module and the network creation module are management modules in an operating system (Operating System, OS) of the device, and generally do not belong to a protocol stack. FIG. 9 shows only instruction transmission between the multichannel management module and the network creation module and other parts by using lines, but does not show data transmission between the application, the multi-protocol module, and the network interface. Functions of the foregoing applications and modules may be implemented by a processor by running code stored in a memory, for example, by running a plurality of threads or a plurality of processes. Some or all of the plurality of threads may belong to a same process, and the network interface needs to be supported by hardware provided by a network adapter. In an implementation, the multichannel management module is located in an application mode of the operating system, and the network creation module is located in a kernel mode of the operating system. A plurality of current technologies for inter-process communication may be used for communication between a plurality of modules. For example, an API may be used for communication between the multichannel management module and the multipath protocol module. This is not described in detail in this application. The two network interfaces may be configured to establish and access any one of the above-mentioned networks that meet the scenario described in this application. For example, both the two network interfaces correspond to a Wi-Fi network adapter of the device, or one corresponds to a Wi-Fi network adapter of the device, and the other corresponds to a network adapter of a cellular network of the device.

The foregoing division into modules is merely an example for description. Another implementation is further listed below. A form of division into modules is not limited in this application. For example, functions of the multichannel management module and the multipath protocol module may be implemented by one module. For another example, a function of the multipath protocol module may also be implemented in an application layer.

In an implementation, the multichannel management module may be configured to obtain event indication information of an application, and the information may be understood as a request of a service. For example, the event indication information indicates to perform a service whose data needs to be transmitted, for example, projection or file transmission. In other words, the event indication information may trigger start of a connection establishment procedure. In an implementation, because a near-field environment is used and a network condition is relatively determined, the multichannel management module may further estimate a performance index of a to-be-established connection. The performance index may include one or more of the following: signal strength, a bandwidth, a throughput, and a delay of an AP access point. In this way, the multichannel management module can start to establish a network connection. Certainly, preparation, such as device discovery and service discovery, needs to be made first. The event indication information may be sent by an application, or may be sent by a module that is in a user mode and that is related to a network connection that manages an application, such as an application network control module mentioned below. The module is usually a process or a thread. FIG. 9 shows only the application.

In an implementation, the multichannel management module may be further configured to obtain information about a network interface from the multipath protocol module. The information about the network interface may be actively collected by the multipath protocol module, or may be collected by a network adapter, a driver, or a module and transferred to the multipath protocol module. The information about the network interface may include one or more of the following: signal strength, a bandwidth, a throughput, and a delay of an AP access point. The multichannel management module may further obtain quality of service of a service. For example, the quality of service may be indicated by at least one index of a bandwidth, a delay, a throughput, and a resolution. In this way, the multichannel management module may distinguish, based on the information about the network interface and a quality of service requirement of the service, or based on the information about the network interface and a priority of the service, a service that needs to be switched to a sub-connection based on an AP network, and transfers information (for example, a service identifier) of a service that needs to be switched to the multipath protocol module.

In an implementation, the multichannel management module may further communicate with the network creation module, to start establishment of the P2P network and activate a network interface corresponding to the AP network. Certainly, after using of the P2P network is completed, to save power, the multichannel management module may communicate with the network creation module to disable the P2P network.

The multipath protocol module is configured to manage data transmission of a multipath connection, for example, congestion control, data sending control, and sub-connection priority control. In the method based on the scenario 1, the multipath protocol module receives an instruction from the multichannel management module, transmits data by using a sub-connection based on an AP network first, and then transmits the data by using a sub-connection based on a P2P network after the sub-connection based on the P2P network is successfully established. For another example, in the method based on the scenario 2, the multipath protocol module preferentially transmits data of a plurality of services by using a sub-connection based on a P2P network, and then adjusts data of at least one service or data of a newly added service to a sub-connection based on an AP network for transmission.

The network creation module is configured to control a network interface, to implement a function of accessing an AP network and establishing a P2P network. The network creation module may be further configured to report statuses of the AP network and the P2P network. The status herein mainly indicates whether the network is available. For example, the status of the AP network may be whether the AP network is normally accessed, and the status of the P2P network may be whether the P2P network is established.

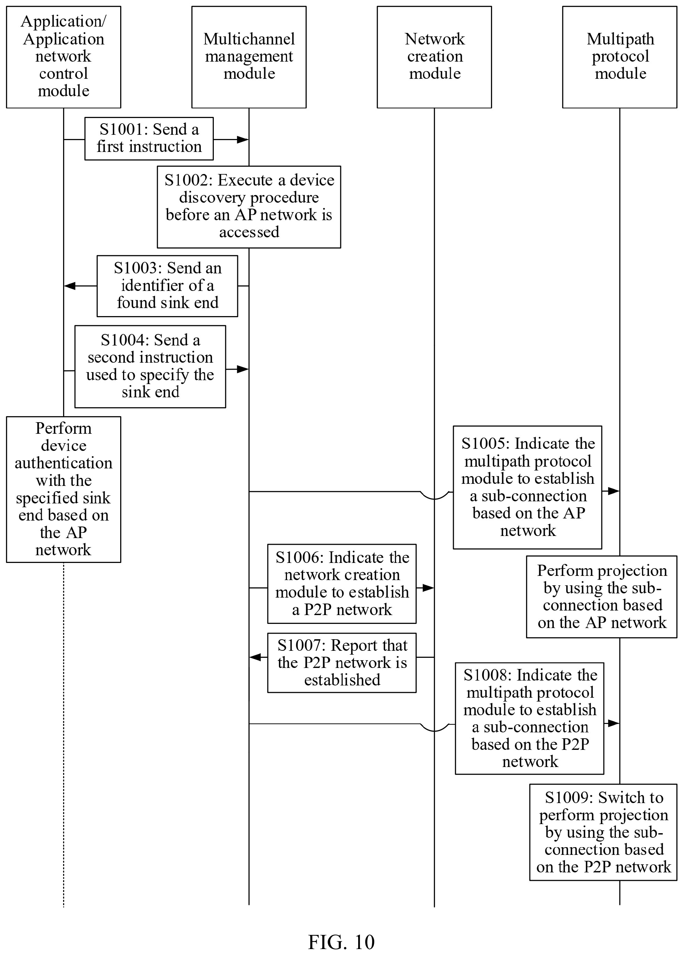

To enhance understanding, the following specifically describes an embodiment of the method corresponding to the scenario 1. For a procedure corresponding to the embodiment, refer to FIG. 10. The method is applied to a device, that is, a source (Source) end, that sends data of a projection service (referred to projection data for short), and a projected device is also referred to as a sink (Sink) end. In addition, the source end and the sink end access a same AP. This embodiment should be read with reference to the foregoing related descriptions, and content described above is not described in detail again in this embodiment. This embodiment includes the following steps.

S1001: Send a first instruction to a multichannel management module, where the first instruction is used to request projection, and the instruction used to request projection is sent by an application or an application network control module.

The first instruction carries a number or an identifier corresponding to a projection service. In an implementation, the first instruction further carries an index indicating quality of service of the projection service. For example, the index includes at least one of a bandwidth, a delay, a throughput, and a resolution.

Sending the first instruction means starting a projection procedure, and then, a preparation process for connection establishment such as device discovery needs to be performed according to regulations.

S1002: The multichannel management module executes, based on the first instruction, a device discovery procedure before an AP network is accessed, to discover the sink end connected to the same AP.

The multichannel management module needs to invoke another module or hardware of the source end and send information by using the AP, to discover the sink end. The another module or hardware is not shown in FIG. 10. A constrained application protocol (Constrained Application Protocol, Coap) may be used in an information exchange process in which the sink end is found.

In some implementations, capability negotiation between two devices needs to be performed based on a service request (for example, "an instruction used to request projection") initiated by the source end. In this way, the sink end that meets a service scenario can be found. For example, for the projection service in this embodiment, the sink end needs to have a large screen, and even the sink end needs to have a relatively high resolution. An AP can access a plurality of devices. Only a device such as a smart television is a qualified sink end. Capability negotiation is also completed by the multichannel management module by invoking another module or hardware at the source end to communicate with another device accessing the same AP.

S1003: The multichannel management module returns an identifier of the found sink end to the application or the application network control module.

The identifier of the sink end is used to indicate a sink end, and may be a device identity (Identity, ID), a device name, or a device type of the sink end.

Optionally, an identifier used to indicate an accessed network and a network type may be further returned. For example, the network type may be related to a communication technology used by a network, such as Wi-Fi and long term evolution (Long Term Evolution, LTE), or may be related to a networking form of a network, such as AP and P2P. For another example, a local area network may alternatively be considered as a network type.

Optionally, the returned identifier of the sink end may be presented to a user by using an interface of an application. For example, the multichannel management module may return one or more identifiers, and display the identifiers on an application interface in a form of a control, so that a user at the source end can confirm or select the identifiers, or may display the identifiers in a form of a picture or a text, so that a user at the source end can learn of the identifiers.

S1004: The multichannel management module receives a second instruction, where the second instruction is used to specify the sink end.

The second instruction comes from an application or an application network control module.

The second instruction includes a selected identifier of the sink end. Optionally, the second instruction may further include identifiers of one or more connections, and the one or more connections are used to transmit data of the projection service. In an implementation, the application or the application network control module may further send identifiers (for example, the TCP or the UDP) of transmission protocols used by these connections to the multichannel management module.

In addition, the application or an application management module further invokes another module of the source end to complete device authentication with the specified sink end based on an AP network.

Steps S1001 to S1004 are preparation work in an AP connection, and this part may be implemented by the conventional technology.

S1005: The multichannel management module indicates the multipath protocol module to establish a sub-connection based on an AP network, so that the multipath protocol module transmits the data of the projection service based on the AP network.

The multichannel management module may indicate, by using an API, the multipath protocol module to establish the sub-connection based on the AP network.

After the AP-based sub-connection is established, the multipath protocol module transmits projection data by using the AP network, so that data transmission can be started without waiting for completion of establishment of the P2P-based sub-connection. In this way, a screen of the source end can be displayed on the sink end more quickly, thereby reducing a waiting time of the user.

The multichannel management module may indicate a transport layer protocol, such as the TCP or the UDP, used by a to-be-established sub-connection, so that the multipath protocol module establishes the sub-connection by using a corresponding protocol.

S1006: The multichannel management module indicates the network creation module to establish the P2P network.

The network creation module may invoke a software resource and a hardware resource of the source end, and communicate with the sink end, to establish the P2P network between the source end and the sink end. After establishment of the P2P network is completed, the network creation module may manage a network interface corresponding to the P2P network.

Optionally, the multichannel management module may report, to the application or the application management module, that establishment of the P2P network starts.

S1007: After the P2P network between the source end and the sink end is successfully established, the network creation module reports, to the multichannel management module, that the P2P network is established.

S1008: After receiving information indicating that the P2P network is established, the multipath management module indicates the multipath protocol module to establish a sub-connection based on the P2P network.

In an implementation, the multipath module adds an identifier of a sub-connection corresponding to the P2P network that is sucessfully created to an available sub-connection list of the multipath protocol module, to indicate the multipath protocol module to establish the sub-connection based on the P2P network.

S1009: After establishment of the P2P sub-connection is completed, the multipath protocol module switches the data of the projection service from the AP sub-connection to the P2P sub-connection for transmission.

Because the two sub-connections are multipath connections belonging to a same transport layer, switching the data of the projection service from the AP sub-connection to the P2P sub-connection does not cause service interruption.

Optionally, after the sub-connection for data transmission is changed, the multipath protocol module may lower a priority of the AP sub-connection, or interrupt the AP sub-connection.

In the foregoing procedure, an action executed by the application or the application management module may be completely executed by the application, or may be completely executed by the application management module, or a part of an action executed by the application or the application management module may be executed by the application, and a part of the action may be executed by the application management module, with the application and the application management module cooperating with each other. A specific implementation is not limited in this application.

In a procedure of this embodiment, the preparation work before the AP connection is established is first described, and in terms of a step sequence, start of creation of the AP connection is described first, and then creation of the P2P network is started. It should be understood that, in another implementation, creation of the P2P network may be started first, and in a process of creating the P2P network, preparation and establishment of the AP connection are started, or creation of the AP connection is started and creation of the P2P network is started at the same time. In addition, two sub-processes of establishing the P2P network and establishing the sub-connection based on the AP network may also be performed at the same time. Alternatively, establishment of the P2P network may be started first, and then, the multipath protocol module is indicated to establish the sub-connection based on the AP network. Alternatively, first, the multipath protocol module is indicated to establish the sub-connection based on the AP network, and then, establishment of the P2P network is started. This is not limited in this application.

Generally speaking, as long as projection data can be transmitted by using the established AP sub-connection in the process of establishing the P2P network and establishing the P2P sub-connection, that is, the AP sub-connection is successfully established and put into use (that is, the projection data is transmitted) before the P2P sub-connection, after the P2P sub-connection is successfully established, the projection data is switched to the P2P sub-connection for transmission. In this way, before the P2P connection is successfully established, the sink end can display screen content of the source end, thereby shortening a waiting time and improving transmission performance. A sequence of the steps in the foregoing embodiments is not strictly limited in this application. For example, by using the procedure in the foregoing embodiment, the sink end can display the screen of the source end within one second after the source end sends a projection instruction. One second is much faster than at least three to four seconds taken to display the screen in the conventional technology listed in Table 1. The user may also feel the difference clearly. In addition, because the MP technology is used, a transmission switching process does not disconnect a connection, smooth service data transmission and smooth service execution can be ensured, and user experience is better.

The following additionally describes an embodiment corresponding to the scenario 2. A method described in this embodiment is applied to a device that sends data of a service. For example, the service may be a video projection service, that is, projecting a video stored on one device to another device. The service has a large data volume and needs to be transmitted for a long time.

One device sends a to-be-projected video to another device by using a sub-connection based on a P2P network. In addition, a multichannel management module of the device evaluates transmission performance of the P2P network in real time. Certainly, data of another service may be transmitted by using the P2P network while data of the video projection service is transmitted.

As described above, the multichannel management module obtains the information about the network interface corresponding to the P2P network, and obtains an identifier and quality of service of the video projection service. For example, the quality of service indicates that the video projection service requires a bandwidth greater than or equal to 2 Mbps.

Based on the information, the multichannel management module may calculate whether the transmission performance of the P2P network can currently meet a quality of service requirement of the video projection service that is being transmitted.

When detecting that the P2P network cannot meet the quality of service of the video projection service, the multichannel management module switches the video projection service to a sub-connection based on an AP network for transmission. For example, if a device moves or the P2P network receives strong interference, transmission performance of the P2P network may deteriorate, and consequently, the quality of service of the video projection service cannot be met. In this way, a network for data transmission can be flexibly switched, and data transmission performance of a service and execution of the service can be ensured as much as possible under an existing network condition.

In an implementation, when the multichannel management module detects that the transmission performance of the P2P network is restored, the multichannel management module indicates a multipath module to switch the data of the video projection service back to the P2P network for transmission.

In addition, in a process of transmitting the data of the video projection service, if the multichannel management module does not detect that transmission performance of the P2P network does not fluctuate, but data of another service also needs to be transmitted in this process, for example, a request of a new service is generated, the multichannel management module may indicate the multipath module to switch the new service to the sub-connection based on the AP network for transmission. A bandwidth required by the new service and a bandwidth required by the video projection service are greater than a bandwidth that can be provided by the P2P network, and the video projection service needs a greater bandwidth than that of the new service. Alternatively, a priority of the video projection service is higher than that of the new service. In this way, the video projection service can better utilize a transmission resource of the P2P network, and data of another service can also be normally transmitted, thereby effectively utilizing transmission resources of the two networks.

The foregoing descriptions related to the scenario 2 are also applicable to this embodiment, and are not repeated herein.

In an implementation, both the projecting device and the second device in this embodiment of this application may be implemented by using a communication device having a structure described in FIG. 4. Rough descriptions are provided above, and some supplements are made below. FIG. 4 is a schematic diagram of a hardware structure of a device according to an embodiment of this application. A network interface card 203 shown in FIG. 4 is one of communication interfaces. The communication interface is configured to communicate with another device. Alternatively, a projecting device and a second device may include some other possible apparatuses in the communication interface, or another type of communication interface implements a function of a network interface card.

A processor 201 may include one or more processing units. The processing unit may be a central processing unit (central processing unit, CPU), an application-specific integrated circuit (application-specific integrated circuit, ASIC), or one or more integrated circuits configured to control program execution of the solutions in this application.

There are communication lines between the components for transferring information between the components.

The communication interface is configured to communicate with another device. In this embodiment of this application, the communication interface may be a module, a circuit, an interface, or another apparatus that can implement a communication function, and is configured to communicate with another device. Optionally, the communication interface may be an independently disposed sender, and the sender may be configured to send information to another device. Alternatively, the communication interface may be an independently disposed receiver, and is configured to receive information from another device. Alternatively, the communication interface may be a component that integrates information sending and receiving functions. A specific implementation of the communication interface is not limited in this embodiment of this application.

The memory 202 may be a read-only memory (read-only memory, ROM) or another type of storage module that can store static information and instructions, a random access memory (random access memory, RAM) or another type of storage module that can dynamically store information and instructions, an electrically erasable programmable read-only memory (electrically erasable programmable read-only memory, EEPROM), an optical disc, a magnetic disk, or another magnetic storage device. The memory may exist independently and is connected to the processor through the communication line. Alternatively, the memory and the processor may be integrated.

The memory 202 is configured to store an executable program 21, referred to as computer executable instructions. An application, a protocol stack (Protocol Stack), various modules, and an operating system mentioned above may be implemented by the executable program 21. The executable program 21 may be invoked by one or more processing units in the processor 401 to perform corresponding steps in the implementations of the foregoing methods in this application.

The executable program in this embodiment of this application may also be referred to as instructions, a computer program, or another name. This is not specifically limited in this embodiment of this application.

In an embodiment, both the projecting device and the second device may include a plurality of processors. Each of these processors may be a single-core processor, or may be a multi-core processor. The processor herein may be one or more devices, circuits, and/or processing cores configured to process data (for example, computer program instructions).

In an embodiment, both the projecting device and the second device may further include an output device and an input device. The output device communicates with the processor 201, and may display information in a plurality of manners. For example, the output device may be a liquid crystal display (liquid crystal display, LCD), a light emitting diode (light emitting diode, LED) display device, a cathode ray tube (cathode ray tube, CRT) display device, or a projector (projector). The input device communicates with the processor 201, and may receive an input of a user in a plurality of manners. For example, the input device may be a mouse, a keyboard, a touchscreen device, or a sensing device.

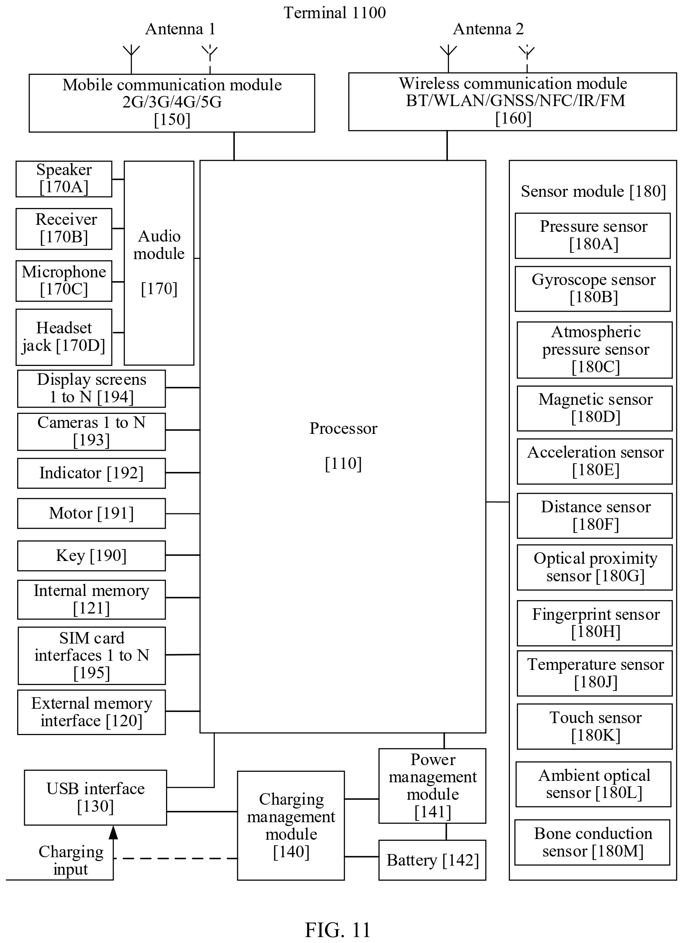

In most actual scenarios, both the projecting device and the second device are terminals. The following uses FIG. 11 as an example to describe a structure of a terminal. The structure of the following terminal is applicable to the projecting device and the second device.

The following uses a terminal 100 as an example to describe this embodiment in detail. It should be understood that the terminal 100 shown in FIG. 11 is merely an example. The terminal 100 may have more or fewer components than those shown in FIG. 11, or two or more components may be combined, or a different component configuration may be used. Various components shown in FIG. 11 may be implemented in hardware, software, or in a combination of hardware and software that includes one or more signal processing and/or application-specific integrated circuits.

The terminal 100 may include: a processor 110, an external memory interface 120, an internal memory 121, a universal serial bus (universal serial bus, USB) interface 130, a charging management module 140, a power management module 141, a battery 142, an antenna 1, an antenna 2, a mobile communication module 150, a wireless communication module 160, an audio module 170, a speaker 170A, a receiver 170B, a microphone 170C, a headset interface 170D, a sensor module 180, a key 190, a motor 191, an indicator 192, a camera 193, a display screen 194, a subscriber identity module (subscriber identification module, SIM) card interface 195, and the like. The sensor module 180 may include one or more of a pressure sensor 180A, a gyroscope sensor 180B, an air pressure sensor 180C, a magnetic sensor 180D, an acceleration sensor 180E, a distance sensor 180F, an optical proximity sensor 180G, a fingerprint sensor 180H, a temperature sensor 180J, a touch sensor 180K, an ambient optical sensor 180L, a bone conduction sensor 180M, and the like.

It may be understood that the structure shown in this embodiment of the present invention does not constitute a specific limitation on the terminal 100. In some other embodiments of this application, the terminal 100 may include more or fewer components than those shown in the figure, or some components may be combined, or some components may be split, or there may be a different component layout. The components shown in the figure may be implemented by hardware, software, or a combination of software and hardware.

The processor 110 may include one or more processing units. For example, the processor 110 may include an application processor (application processor, AP), a modem processor, a graphics processing unit (graphics processing unit, GPU), an image signal processor (image signal processor, ISP), a controller, a memory, a video codec, a digital signal processor (digital signal processor, DSP), a baseband processor, a neural-network processing unit (neural-network processing unit, NPU), and/or the like. Different processing units may be independent components, or may be integrated into one or more processors.

The controller may be a nerve center and a command center of the terminal 100. The controller may generate an operation control signal based on instruction operation code and a time sequence signal, to complete control of instruction reading and instruction execution.

A memory may be further disposed in the processor 110, and is configured to store the instruction and the data described above. In some embodiments, the memory in the processor 110 is a cache. The memory may store instructions or data just used or cyclically used by the processor 110. If the processor 110 needs to use the instructions or the data again, the processor may directly invoke the instructions or the data from the memory. This avoids repeated access, reduces a waiting time of the processor 110, and improves system efficiency.

In some embodiments, the processor 110 may include one or more interfaces. The interface may include an integrated circuit (inter-integrated circuit, I2C) interface, an inter-integrated circuit sound (inter-integrated circuit sound, I2S) interface, a pulse code modulation (pulse code modulation, PCM) interface, a universal asynchronous receiver/transmitter (universal asynchronous receiver/transmitter, UART) interface, a mobile industry processor interface (mobile industry processor interface, MIPI), a general-purpose input/output (general-purpose input/output, GPIO) interface, a subscriber identity module (subscriber identity module, SIM) interface, a universal serial bus (universal serial bus, USB) interface, and/or the like.

The charging management module 140 is configured to receive charging input from a charger.

A wireless communication function of the terminal 100 may be implemented by using the antenna 1, the antenna 2, the mobile communication module 150, the wireless communication module 160, the modem processor, the baseband processor, and the like. These components may be considered as the communication interfaces described above. Some functions of a sending module and a receiving module described below also require cooperation of one or more of these components.

The antenna 1 and the antenna 2 are configured to transmit and receive electromagnetic wave signals. Each antenna in the terminal 100 may be configured to cover one or more communication frequency bands. Different antennas may be further reused, to improve antenna utilization. For example, the antenna 1 may be reused as a diversity antenna of a wireless local area network. In some other embodiments, the antenna may be used in combination with a tuning switch.

The mobile communication module 150 may provide a solution to wireless communication such as 2G/3G/4G/5G applied to the terminal 100. The mobile communication module 150 may include at least one filter, a switch, a power amplifier, a low noise amplifier (low noise amplifier, LNA), and the like. The mobile communication module 150 may receive an electromagnetic wave through the antenna 1, perform processing such as filtering or amplification on the received electromagnetic wave, and transmit the electromagnetic wave to the modem processor for demodulation. The mobile communication module 150 may further amplify a signal modulated by the modem processor, and convert the signal into an electromagnetic wave for radiation through the antenna 1. In some embodiments, at least some functional modules of the mobile communication module 150 may be disposed in the processor 110. In some embodiments, at least some functional modules of the mobile communication module 150 and at least some modules of the processor 110 may be disposed in a same device. The network adapter may be considered as a form of the wireless communication module 160.

The modem processor may include a modulator and a demodulator. The modulator is configured to modulate a to-be-sent low-frequency baseband signal into a medium- and high-frequency signal. The demodulator is configured to demodulate a received electromagnetic wave signal into a low-frequency baseband signal. Then, the demodulator transmits the demodulated low-frequency baseband signal to the baseband processor for processing. The low-frequency baseband signal is processed by the baseband processor and then transferred to the application processor. The application processor outputs a sound signal through an audio device (which is not limited to the speaker 170A, the receiver 170B, or the like), or displays an image or a video through the display screen 194. In some embodiments, the modem processor may be an independent component. In some other embodiments, the modem processor may be independent of the processor 110, and is disposed in a same device as the mobile communication module 150 or another functional module.

The wireless communication module 160 may provide a solution to wireless communication applied to the mobile phone 100, for example, a wireless local area network (wireless local area network, WLAN) (for example, a wireless fidelity (wireless fidelity, Wi-Fi) network), bluetooth (bluetooth, BT), a global navigation satellite system (global navigation satellite system, GNSS), frequency modulation (frequency modulation, FM), near field communication (near field communication, NFC), and infrared (infrared, IR). The wireless communication module 160 may be one or more devices integrating at least one communication processing module. The wireless communication module 160 receives an electromagnetic wave through the antenna 2, performs frequency modulation and filtering processing on an electromagnetic wave signal, and sends a processed signal to the processor 110. The wireless communication module 160 may further receive a to-be-sent signal from the processor 110, perform frequency modulation and amplification on the signal, convert the signal into an electromagnetic wave by using the antenna 2, and radiate the electromagnetic wave. The network adapter may be considered as a form of the wireless communication module 160.

In some embodiments, the antenna 1 of the terminal 100 is coupled to the mobile communication module 150, and the antenna 2 is coupled to the wireless communication module 160, so that the terminal 100 may communicate with a network and another device by using a wireless communication technology. The wireless communication technology may include a global system for mobile communications (global system for mobile communications, GSM), a general packet radio service (general packet radio service, GPRS), code division multiple access (code division multiple access, CDMA), wideband code division multiple access (wideband code division multiple access, WCDMA), time-division code division multiple access (time-division code division multiple access, TD-SCDMA), long term evolution (long term evolution, LTE), BT, a GNSS, a WLAN, NFC, FM, an IR technology, and/or the like. The GNSS may include a global positioning system (global positioning system, GPS), a global navigation satellite system (global navigation satellite system, GLONASS), a BeiDou navigation satellite system (beidou navigation satellite system, BDS), a quasi-zenith satellite system (quasi-zenith satellite system, QZSS), and/or a satellite based augmentation system (satellite based augmentation systems, SBAS).

The terminal 100 may implement a display function by using the GPU, the display screen 194, the application processor, and the like. The GPU is a microprocessor for image processing, and is connected to the display screen 194 and the application processor. The GPU is configured to perform mathematical and geometric calculation for graphics rendering. The processor 110 may include one or more GPUs that execute program instructions to generate or change display information.

The display screen 194 is configured to display an image, a video, and the like. The display screen 194 includes a display panel. The display panel may be a liquid crystal display (liquid crystal display, LCD), an organic light-emitting diode (organic light-emitting diode, OLED), an active-matrix organic light-emitting diode or an active-matrix organic light-emitting diode (active-matrix organic light emitting diode, AMOLED), a flexible light-emitting diode (flex light-emitting diode, FLED), a mini-LED, a micro-LED, a micro-OLED, a quantum dot light-emitting diode (quantum dot light emitting diodes, QLED), or the like. In some embodiments, the terminal 100 may include one or N displays 194, where N is a positive integer greater than 1.

The terminal 100 may implement a photographing function by using the ISP, the camera 193, the video codec, the GPU, the display screen 194, the application processor, and the like.

The external memory interface 120 may be used to connect an external memory card, for example, a micro SD card, to extend storage of the terminal 100. The internal memory 121 may be configured to store computer-executable program code, and the executable program code includes instructions. The processor 110 runs the instructions stored in the internal memory 121, to perform various function applications of the terminal 100 and data processing. The internal memory 121 may include a program storage area and a data storage area. The program storage area may store an operating system, an application required by at least one function (such as a sound playing function or an image playing function), and the like. The data storage area may store data (for example, audio data and contacts) and the like created when the terminal 100 is used. In addition, the internal memory 121 may include a high-speed random access memory, and may further include a nonvolatile memory, for example, at least one magnetic disk storage device, a flash memory, or a universal flash storage (universal flash storage, UFS).

The mobile phone 100 may implement an audio function by using the audio module 170, the speaker 170A, the receiver 170B, the microphone 170C, the headset interface 170D, and the application processor. The audio module 170 is configured to convert digital audio information into an analog audio signal for output, and is also configured to convert an analog audio input into a digital audio signal. The speaker 170A, also referred to as a "horn", is configured to convert an audio electrical signal into a sound signal. The terminal 100 may listen to music or listen to a hands-free call by using the speaker 170A. The receiver 170B, also referred to as an "earpiece", is configured to convert an audio electrical signal into a sound signal. The microphone 170C, also referred to as a "mike" or a "mic", is configured to convert a sound signal into an electrical signal. The headset interface 170D is configured to connect a wired headset. The pressure sensor 180A is configured to sense a pressure signal, and may convert the pressure signal into an electrical signal. In some embodiments, the pressure sensor 180A may be disposed on the display screen 194. The gyroscope sensor 180B may be configured to determine a motion posture of the terminal 100. The air pressure sensor 180C is configured to measure an air pressure. The magnetic sensor 180D includes a Hall sensor. The acceleration sensor 180E may detect magnitudes of accelerations of the terminal 100 in various directions (usually on three axes). The distance sensor 180F is configured to measure a distance. The terminal 100 may measure the distance by using infrared or laser. The optical proximity sensor 180G may include, for example, a light emitting diode (LED) and a photodetector, for example, a photodiode. The ambient optical sensor 180L is configured to sense ambient brightness. The fingerprint sensor 180H is configured to collect a fingerprint. The temperature sensor 180 J is configured to detect a temperature. The touch sensor 180K is also referred to as a "touch panel". The touch sensor 180K may be disposed on the display screen 194, and the touch sensor 180K and the display screen 194 constitute a touchscreen, also referred to as a "touchscreen". The touch sensor 180K is configured to detect a touch operation performed on or near the touch sensor 180K. The touch sensor may transfer the detected touch operation to the application processor, to determine a touch event type. The display screen 194 may provide a visual output related to the touch operation. In some other embodiments, the touch sensor 180K may alternatively be disposed on a surface of the terminal 100 at a position different from that of the display screen 194. The bone conduction sensor 180M may obtain a vibration signal. The key 190 includes a power key, a volume key, and the like. The motor 191 may generate a vibration alert. The indicator 192 may be an indicator light, and may be configured to indicate a charging status and a power change, or may be configured to indicate a message, a missed call, a notification, or the like. The SIM card interface 195 is configured to connect to a SIM card.

It can be understood that, to implement the foregoing functions, the device includes corresponding hardware structures and/or software modules for executing the functions. A person skilled in the art should be easily aware that, in combination with the examples described in embodiments disclosed in this specification, units, algorithms, and steps may be implemented by hardware or a combination of hardware and computer software in embodiments of this application. Whether a function is performed by hardware or hardware driven by computer software depends on particular applications and design constraints of the technical solutions. A person skilled in the art may use different methods to implement the described functions for each particular application, but it should not be considered that the implementation goes beyond the scope of embodiments of this application.

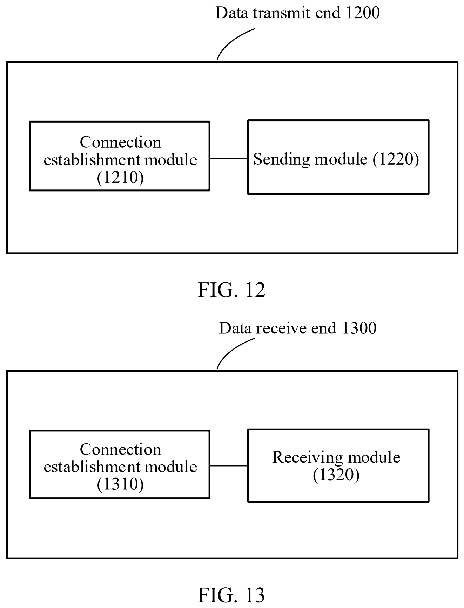

In the embodiments, the projecting device and the second device may be divided into functional modules according to the foregoing method example. For example, each functional module may be obtained through division corresponding to each function, or two or more functions may be integrated into one processing module. FIG. 9 shows a division manner. The foregoing integrated modules may be implemented in a form of hardware, or may be implemented in a form of a software functional module. It should be noted that in the embodiments of this application, division into modules is an example, and is merely a logical function division, and may be another division during actual implementation. FIG. 12 describes another manner of division into modules of a data transmit end. It should be understood that the data transmit end is one end that sends data of a service and that is in a connection. In other words, for a device, the device may be both a data transmit end and a data receive end, or may be a data transmit end in a period of time and may be a data receive end in another period of time. The data transmit end may be the foregoing projecting device, a component (such as a chip system) in the projecting device, or another component that supports a function of the projecting device. The data transmit end 1200 includes: a connection establishing module 1210 and a sending module 1220.

The connection establishment module 1210 is configured to support the data transmit end in performing S601A and S603A in the foregoing method embodiment, and/or is configured to perform a process related to connection establishment described in this specification. The sending module 1120 is configured to support the communication device in performing S602A, S601B, and S602B in the foregoing method embodiment, and/or is configured to perform a process related to sending of the data of the service described in this specification.

The connection establishment module 1210 is further configured to support the communication device in performing steps related to connection establishment in S1002 to S1008 in the foregoing method embodiment.

The sending module 1220 is further configured to support the communication device in performing actions related to sending of the data of the service in S1005 and S1009 in the foregoing method embodiment.

In other words, some functions of the multichannel management module and the network creation module described above may be implemented by the connection establishment module 1210, and some functions of the application, the multipath protocol module, and the network interface described above may be implemented by the sending module 1220.

Optionally, the data transmit end may further include a storage module (not shown in the figure), to store code and data of a service.

Correspondingly, FIG. 13 describes a manner of division into modules of a data receive end. For a device, the device may be both a data transmit end and a data receive end, or may be a data transmit end in a period of time and may be a data receive end in another period of time. The data receive end may be the foregoing second device, a component (such as a chip system) in the second device, or another component that supports a function of the second device. The data transmit end 1300 includes: a connection establishing module 1310 and a sending module 1320.

The connection establishment module 1310 is configured to support the data receive end in performing S601A and S603A in the foregoing method embodiment, and/or is configured to perform a process related to connection establishment described in this specification. This is because the connection establishment process is a process that requires mutual cooperation between two ends.

The receiving module 1320 is configured to support the communication device in performing S602A, S601B, and S602B in the foregoing method embodiment, and/or is configured to perform a step of receiving data of services corresponding to a process related to sending of the data of the service described in this specification.

The data receive end may further include a storage module (not shown in the figure), to store code and data of a service.

This application focuses on the data transmit end, and the data receive end cooperates with an action of the data transmit end. Therefore, a person skilled in the art may understand a function of the data receive end in this application. In addition, this application further describes a data transmission system, to better facilitate understanding.

When an integrated unit is used, the foregoing modules except the sending module and the receiving module may be integrated into one processing module for implementation. The processing module may be a processor or a controller, for example, a CPU, a general-purpose processor, a DSP, an application-specific integrated circuit (Application-Specific Integrated Circuit, ASIC), a field programmable gate array (Field Programmable Gate Array, FPGA) or another programmable logic device, a transistor logic device, a hardware component, or any combination thereof. The processing module may implement or execute various example logical blocks, modules, and circuits described with reference to content disclosed in this application. Alternatively, the processor may be a combination of processors implementing a computing function, for example, a combination including one or more microprocessors, or a combination of a DSP and a microprocessor.

The receiving module and the sending module may be communication interfaces of a device (for example, a mobile phone), and may be specifically one or more of a network adapter, an RF circuit, a WiFi module, or a Bluetooth module.

For example, when the foregoing connection establishment module is the processor 201 shown in FIG. 4, the storage module is the memory 202 shown in FIG. 4, and the sending module/receiving module is the network interface card shown in FIG. 4, the communication device provided in this application may be the second device 20 shown in FIG. 4. The processor, the communication interface, and the memory may be coupled together by using a bus. For another example, the sending module/receiving module is that the antenna 1 shown in FIG. 11 is coupled to the mobile communication module 150, or the antenna 2 is coupled to the wireless communication module 160.

An embodiment of this application further provides a chip system. The chip system is applied to the foregoing communication device. The chip system includes: one or more interface circuits and one or more processors. The interface circuit and the processor are interconnected by using a line. The interface circuit is configured to: receive a signal from a memory of the communication device, and send the signal to the processor. The signal includes computer instructions stored in the memory. When the processor executes the computer instructions, the communication device performs the method performed by the sending device in the foregoing method embodiment, performs the method performed by the forwarding device in the foregoing method embodiment, or performs the method performed by the receiving device in the foregoing method embodiment.

An embodiment of this application further provides a computer storage medium. The computer storage medium includes computer instructions. When the computer instructions run on a communication device, the communication device is enabled to perform the method performed by the sending device in the foregoing method embodiment, the method performed by the forwarding device in the foregoing method embodiment, or the method performed by the receiving device in the foregoing method embodiment.

An embodiment of this application further provides a computer program product. When the computer program product runs on a computer, the computer is enabled to perform the method performed by the sending device in the foregoing method embodiment, the method performed by the forwarding device in the foregoing method embodiment; or the method performed by the receiving device in the foregoing method embodiment.

The communication device, the chip system, the computer storage medium, and the computer program product provided in this application are all configured to perform the corresponding methods provided in the foregoing descriptions. Therefore, for beneficial effects that can be achieved by the communication device, the chip system, the computer storage medium, and the computer program product, refer to the beneficial effects of the corresponding methods provided in the foregoing descriptions. Details are not described herein again.

According to the foregoing descriptions about implementations, a person skilled in the art may clearly understand that, for the purpose of convenient and brief description, division into the foregoing functional modules is used as an example for illustration. In actual application, the foregoing functions may be allocated to different functional modules and implemented based on a requirement, in other words, an inner structure of an apparatus is divided into different functional modules to implement all or some of the functions described above.

In the several embodiments provided in this application, it should be understood that the disclosed apparatuses and methods may be implemented in another manner. For example, the described apparatus embodiment is merely an example. For example, division into the modules or the units is merely logical function division and may be other division in actual implementation. For example, a plurality of units or components may be combined or integrated into another apparatus, or some features may be ignored or not performed. In addition, the displayed or discussed mutual couplings or direct couplings or communication connections may be implemented through some interfaces. The indirect couplings or communication connections between the apparatuses or units may be implemented in an electrical form, a mechanical form, or another form.

The units described as separate parts may or may not be physically separate, and parts displayed as units may be one or more physical units, may be located in one place, or may be distributed on different places. Some or all of the units may be selected based on an actual requirement to achieve the objectives of the solutions of embodiments.

In addition, functional units in embodiments of this application may be integrated into one processing unit, each of the units may exist alone physically, or two or more units are integrated into one unit. The integrated unit may be implemented in a form of hardware, or may be implemented in a form of a software function unit.

When the integrated unit is implemented in the form of the software functional unit and sold or used as an independent product, the integrated unit may be stored in a readable storage medium. Based on such an understanding, the technical solutions in embodiments of this application essentially, or the part contributing to the conventional technology, or all or some of the technical solutions may be implemented in a form of a software product. The software product is stored in a storage medium and includes several instructions for instructing a device (which may be a single-chip microcomputer, a chip or the like) or a processor (processor) to perform all or some of the steps of the methods described in embodiments of this application. The foregoing storage medium includes: any medium that can store program code, such as a USB flash drive, a removable hard disk, a read-only memory (read only memory, ROM), a random access memory (random access memory, RAM), a magnetic disk, or an optical disc.

The foregoing descriptions are merely specific implementations of this application, but are not intended to limit the protection scope of this application. Any variation or replacement within the technical scope disclosed in this application shall fall within the protection scope of this application. Therefore, the protection scope of this application shall be subject to the protection scope of the claims.

## Claims

1. A method for sending data in a near field, wherein the method is applied to a first device, and the method comprises:
sending data of a first service to a second device by using a first network; and
in a process of sending the data of the first service, in response to a request of a second service, sending data of the second service by using a second wireless network; or in response to a request of a second service, sending data of a second service by using the first network, and sending the data of the first service by using the second network.

2. The method according to claim 1, wherein a total bandwidth requirement of the first service and the second service is greater than a bandwidth of the first network, and the bandwidth of the first network is greater than a bandwidth of the second network.

3. The method according to claim 1 or 2, wherein if a bandwidth requirement of the first service is greater than a bandwidth requirement of the second service, sending, by the first device, the data of the second service by using the second network; and if the bandwidth requirement of the first service is less than the bandwidth requirement of the second service, sending, by the first device, the data of the second service by using the first network, and sending the data of the first service by using the second network.

4. The method according to claim 1 or 2, wherein transmission performance of the first network is better than transmission performance of the second network, and if a priority of the first service is higher than a priority of the second service, sending, by the first device, the data of the second service by using the second network; and if the priority of the first service is lower than the priority of the third service, sending, by the first device, the data of the second service by using the first network, and sending the data of the first service by using the second network.

5. The method according to any one of claims 1 to 4, wherein the first device uses the first network and the second network based on a multipath MP technology.

6. A device, wherein the device comprises: a memory and a processor, wherein the memory is coupled to the processor, the memory is configured to store computer program code, the computer program code comprises computer instructions, and when the computer instructions are executed by the processor, the device is enabled to perform the method according to any one of claims 1 to 5.

7. A computer storage medium, comprising instructions, wherein when the instructions run on a computer, the computer is enabled to perform the method according to any one of claims 1 to 5.

8. A computer program product, comprising instructions, wherein when the instructions run on a computer, the computer is enabled to perform the method according to any one of claims 1 to 5.
